# EUROPEAN PATENT SPECIFICATION

(11) **EP 3 456 004 B1**
(45) Date of publication and mention of the grant of the patent: **07.06.2023**
(21) Application number: 16790456.4
(22) Date of filing: 30.09.2016
(51) Int. Cl.: H04L 43/16, H04L 41/044, H04L 43/065, H04L 41/40, H04L 43/20

(54) **APPARATUS OF PERFORMANCE MEASUREMENT DATA SUBSCRIPTION FOR NFV PERFORMANCE MANAGEMENT**
VORRICHTUNG ZUR DURCHFÜHRUNG EINER MESSDATENANMELDUNG FÜR NFV-LEISTUNGSVERWALTUNG
APPAREIL D'ABONNEMENT À DES DONNÉES DE MESURE DE PERFORMANCES POUR GESTION DE PERFORMANCES DE NFV

(30) Priority: 11.05.2016 US 201662334851 P
(43) Date of publication of application: 20.03.2019
(73) Proprietor: Intel Corporation, Santa Clara, CA 95054 (US)
(72) Inventor: CHOU, Joey, Scottsdale, Arizona 85258 (US)
(74) Representative: HGF
(86) International application number: PCT/US2016/054804
(87) International publication number: WO 2017/196389

(56) References cited:
- "Network Functions Virtualisation (NFV); Management and Orchestration; Vi-Vnfm reference point - Interface and Information Model Specification", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV IFA, no. V2.1.1, 1 April 2016 (2016-04-01), XP014274009,
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.8.0, 21 November 2014 (2014-11-21), pages 1-189, XP014228983, [retrieved on 2014-11-21]

## Description

### FIELD

The present disclosure relates to wireless technology, and more specifically to performance measurements of virtual network functions (VNFs) of a network function virtualization network of an evolved packet core (EPC) network.

### BACKGROUND

Network Function Virtualization (NFV) involves the replacement of physical network nodes with Virtual Network Functions (VNFs) implemented via Virtualization Resources (VRs) that perform the same function as the physical node.
"Network Functions Virtualisation (NFV); Management and Orchestration; Vi-Vnfm reference point - Interface and Information Model Specification", NFV IFA, V2.1.1, GROUP SPECIFICATION, EUROPEAN TELECOMMUNICATIONS STANDARDS INSTITUTE (ETSI) relates to the interfaces supported over the Vi-Vnfm reference point of the NFV-MANO architectural framework as well as information elements exchanged over those interfaces.
"Network Function Virtualization (NFV) Management and Orchestration; GS NFV-MAN 001", ISG - NFV, V0.8.0, ETSI DRAFT; GS NFV-MAN 001, EUROPEAN TELECOMMUNICATIONS STANDARDS INSTITUTE (ETSI), relates to the management and orchestration framework required for the provisioning of virtualized network functions (VNF), and the related operations, such as the configuration of the virtualized network functions and the infrastructure these functions run on.

### Summary

Aspects and embodiments of the invention are set out in the pending claims.

### BRIEF DESCRIPTION OF THE DRAWINGS

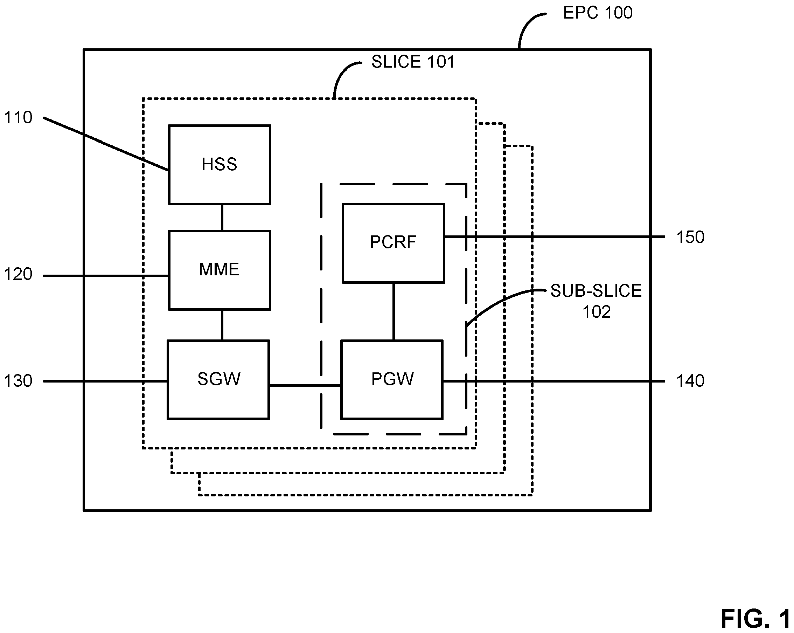

**FIG. 1** is a diagram illustrating components of a network in accordance with some embodiments.

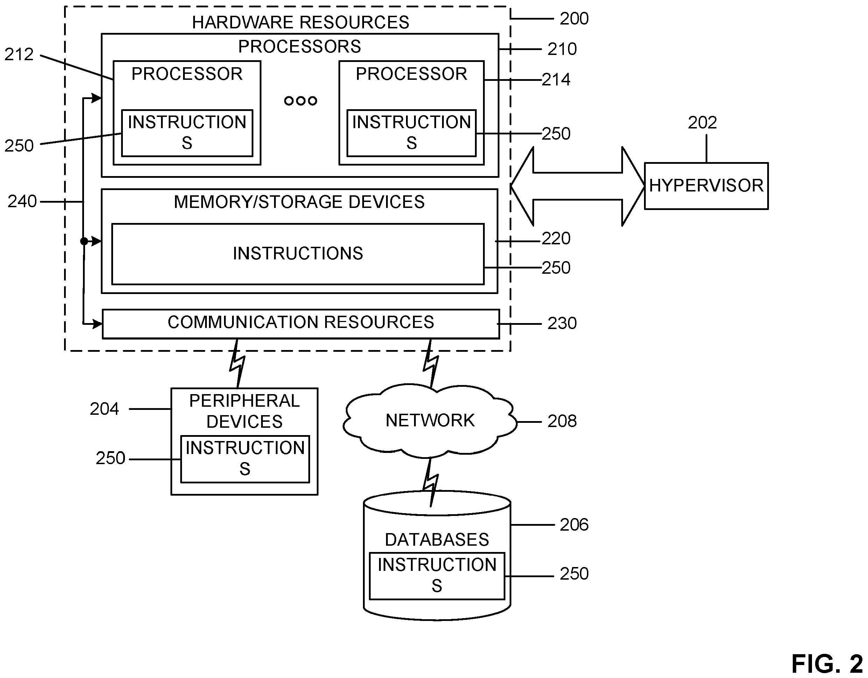

**Fig. 2** is a block diagram illustrating components, according to some example embodiments, able to read instructions from a machine-readable or computer-readable medium (e.g., a machine-readable storage medium) and perform any one or more of the methodologies discussed herein.

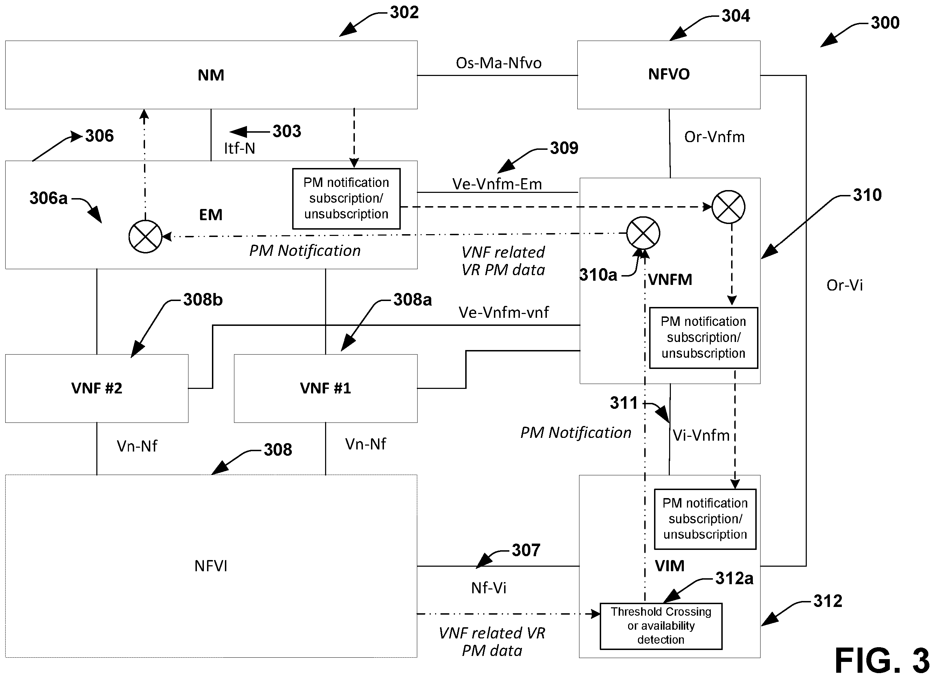

**Fig. 3** depicts a network function virtualization (NFV) system/network that facilitates to subscribe or unsubscribe to the notifications associated with performance measurement (PM) jobs in connection with various aspects described herein.

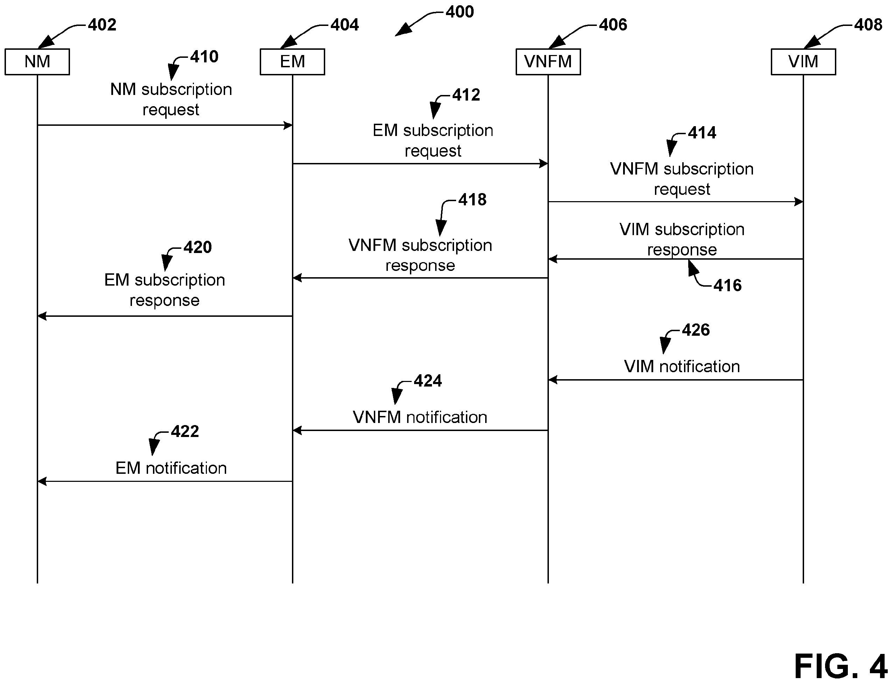

**Fig. 4** illustrates an example flow diagram that depicts the signal flow between the various entities in a network function virtualization (NFV) network 400 that facilitates to subscribe to notifications associated with the performance measurement (PM) data, according to various aspects described herein.

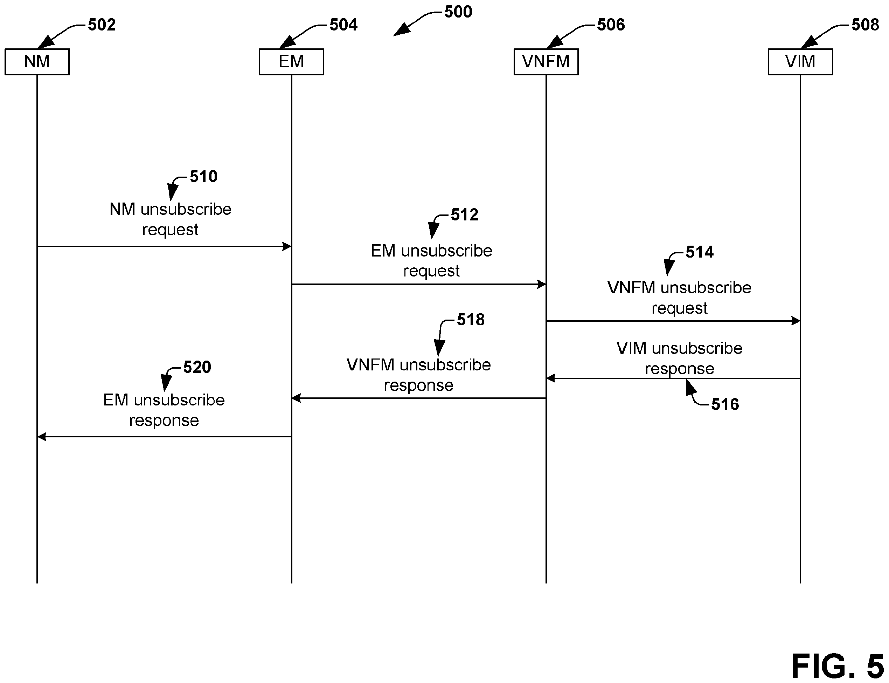

**Fig. 5** illustrates an example flow diagram that depicts the signal flow between the various entities in a network function virtualization (NFV) network that facilitates to unsubscribe to notifications associated with the performance measurement (PM) data, according to various aspects described herein.

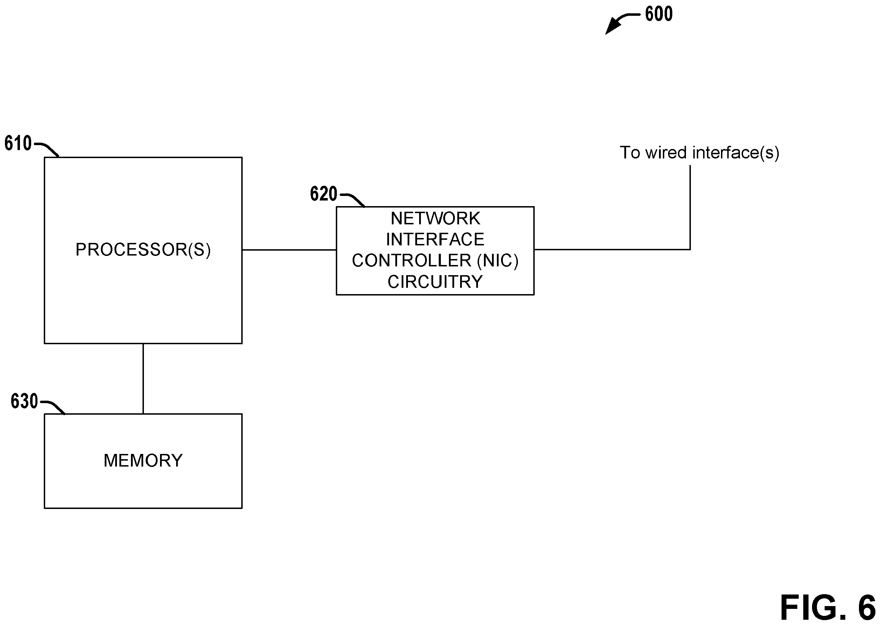

**FIG. 6** illustrates a block diagram of an apparatus included within a Network Manager (NM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein.

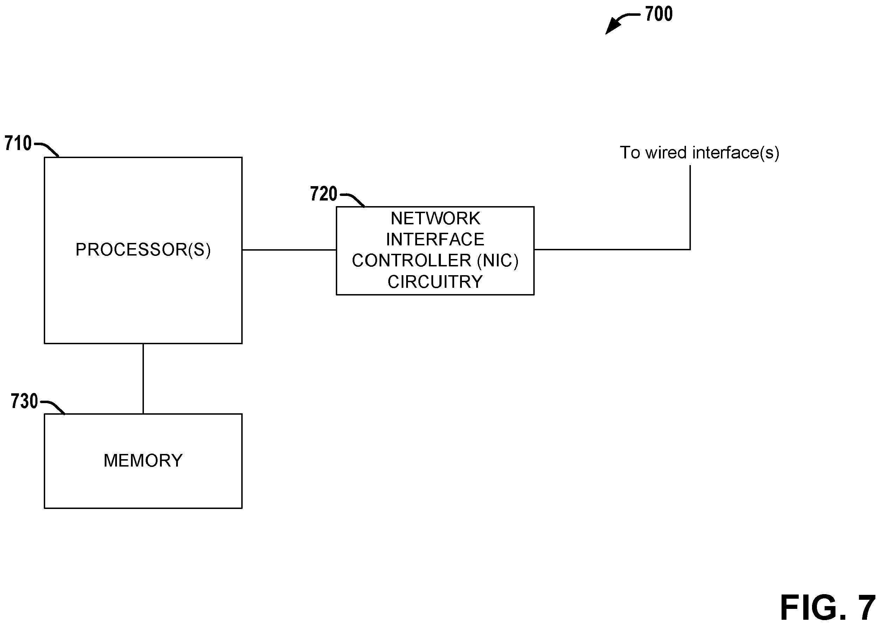

**FIG. 7** illustrates a block diagram of an apparatus included within an Element Manager (EM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein.

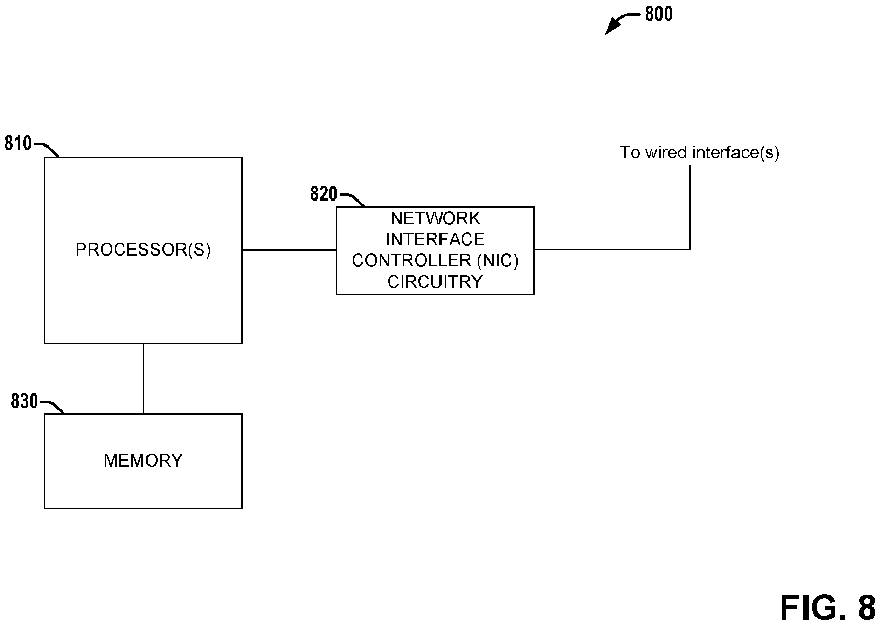

**FIG. 8** illustrates a block diagram of an apparatus included within an Virtualized Network Function Manager (VNFM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein.

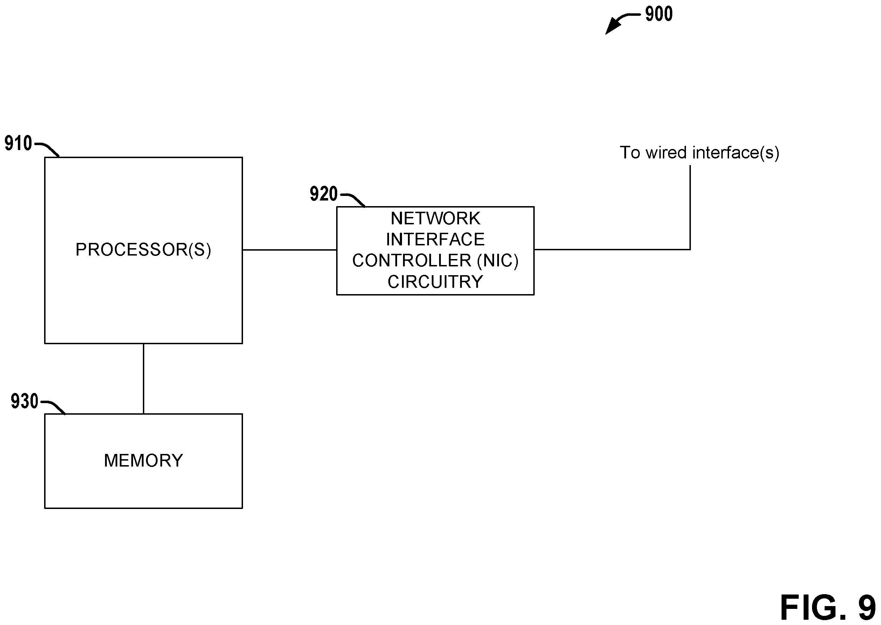

**FIG. 9** illustrates a block diagram of an apparatus included within an Virtualized infrastructure Manager (VIM) that facilitates to subscribe or unsubscribe to notifications associated with virtualized resources (VR) performance measurement (PM) data of one or more virtual network function (VNF) instances of the NFV network, according to various aspects described herein.

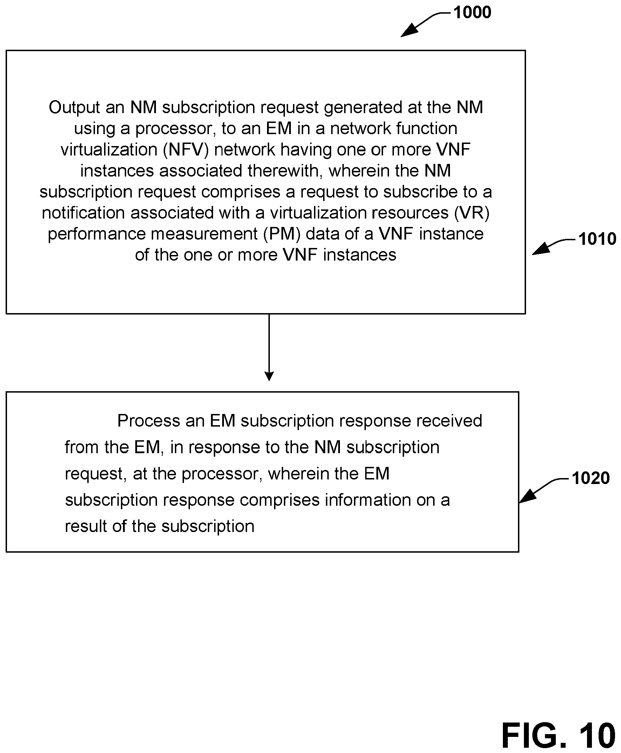

**Fig. 10** illustrates a flowchart of a method for a network manager (NM) of a network function virtualization network, that facilitates to subscribe to notifications associated with virtualized resources (VR) performance measurement (PM) data of one or more virtual network function (VNF) instances of the NFV network, according to various embodiments of the disclosure.

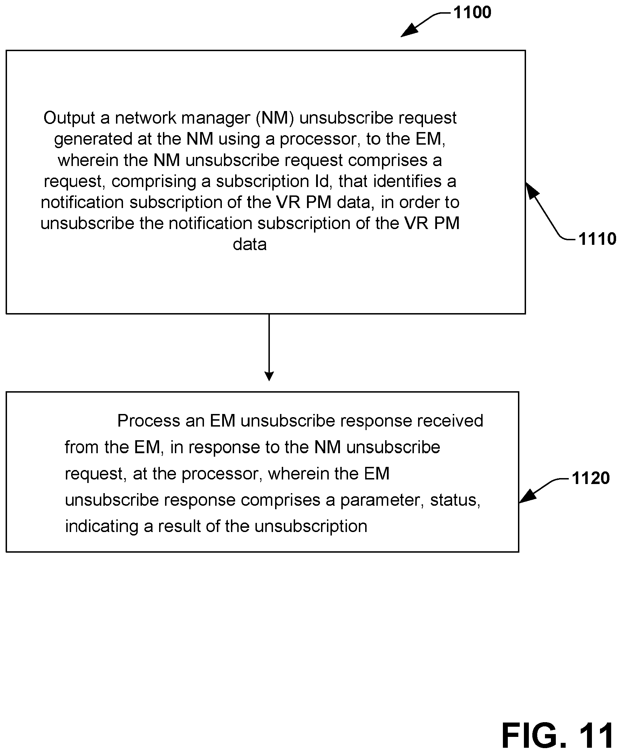

**Fig. 11** illustrates a flowchart of a method for a network manager (NM) of a network function virtualization network, that facilitates to unsubscribe to notifications associated with virtualized resources (VR) performance measurement (PM) data of one or more virtual network function (VNF) instances of the NFV network, according to various embodiments of the disclosure.

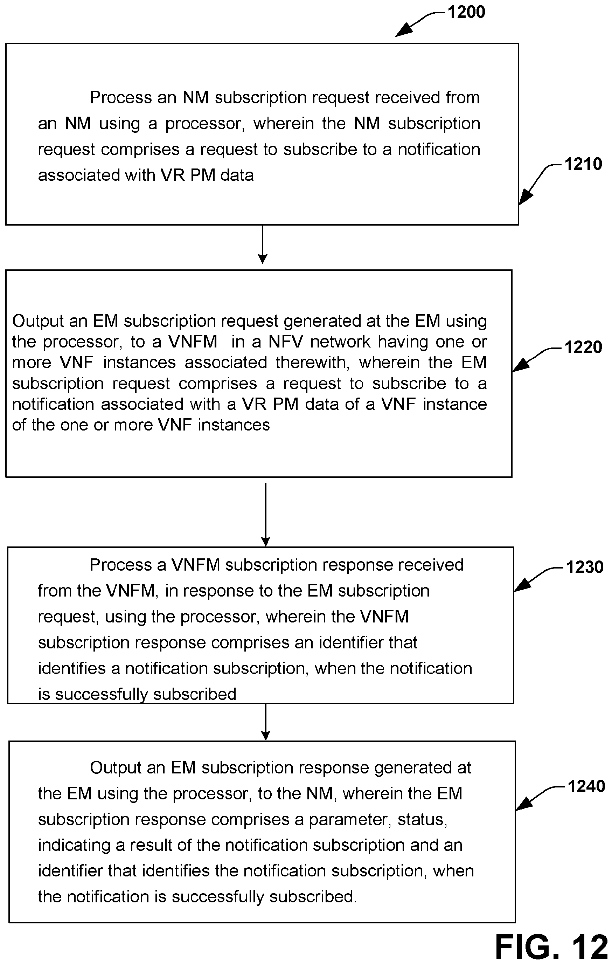

**Fig. 12** illustrates a flowchart of a method for an element manager (EM) of a network function virtualization network, that facilitates to subscribe to notifications associated with virtualized resources (VR) performance measurement (PM) data of one or more virtual network function (VNF) instances of the NFV network, according to various embodiments of the disclosure.

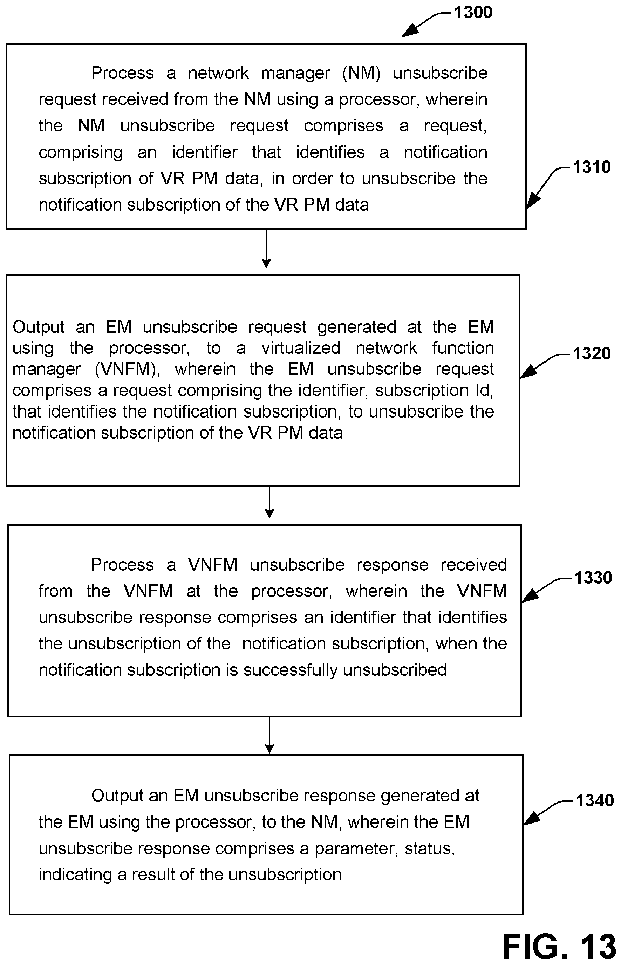

**Fig. 13** illustrates a flowchart of a method for an element manager (EM) of a network function virtualization network, that facilitates to unsubscribe to notifications associated with virtualized resources (VR) performance measurement (PM) data of one or more virtual network function (VNF) instances of the NFV network, according to various embodiments of the disclosure.

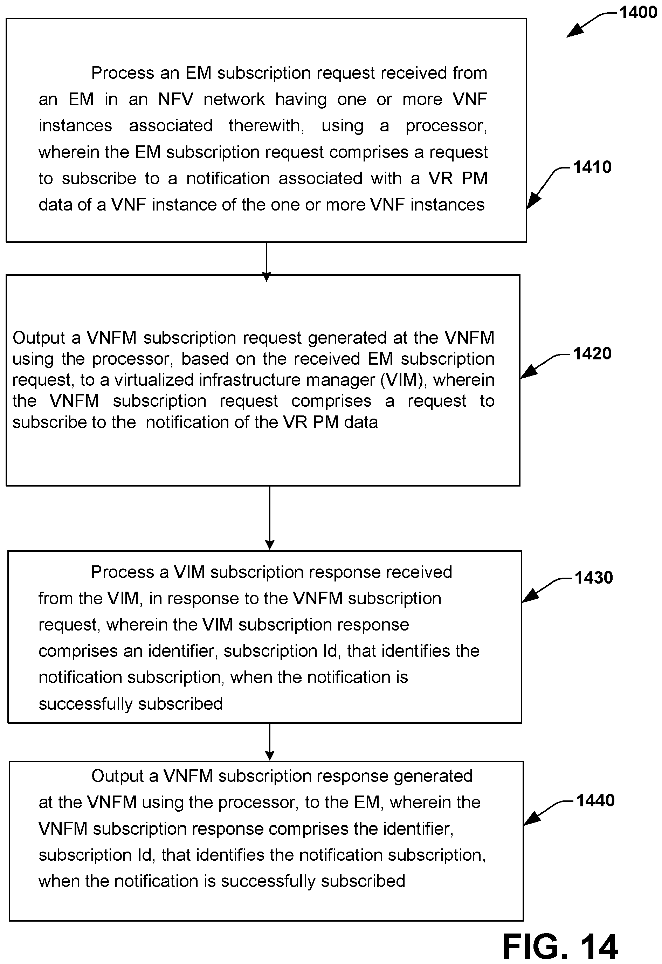

**Fig. 14** illustrates a flowchart of a method for a Virtualized Network Function Manager (VNFM) of a network function virtualization network, that facilitates to subscribe to notifications associated with virtualized resources (VR) performance measurement (PM) data of one or more virtual network function (VNF) instances of the NFV network, according to various embodiments of the disclosure.

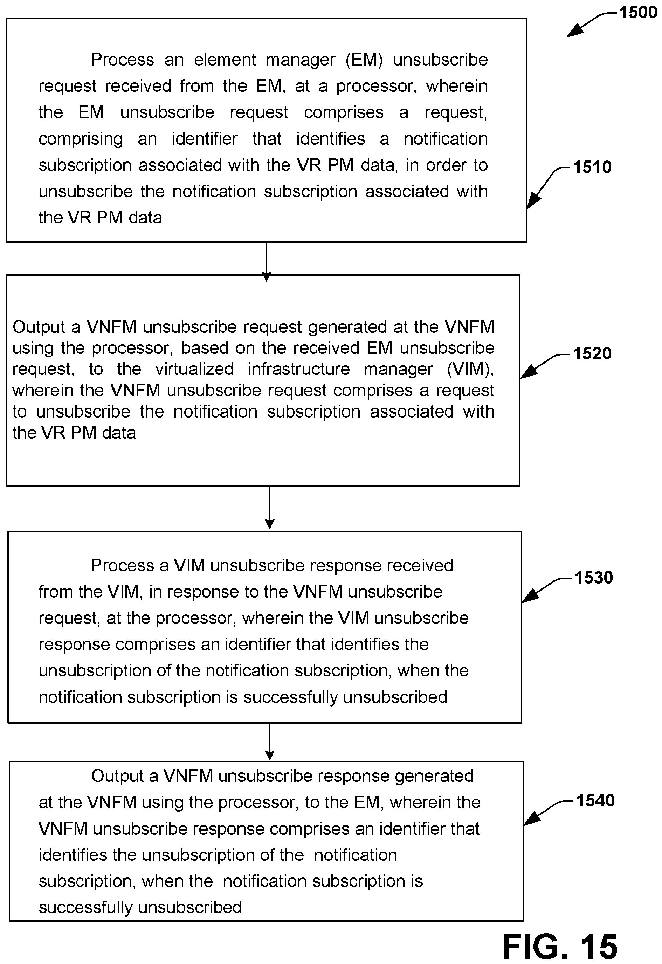

**Fig. 15** illustrates a flowchart of a method for a Virtualized Network Function Manager (VNFM) of a network function virtualization network, that facilitates to unsubscribe to notifications associated with virtualized resources (VR) performance measurement (PM) data of one or more virtual network function (VNF) instances of the NFV network, according to various embodiments of the disclosure.

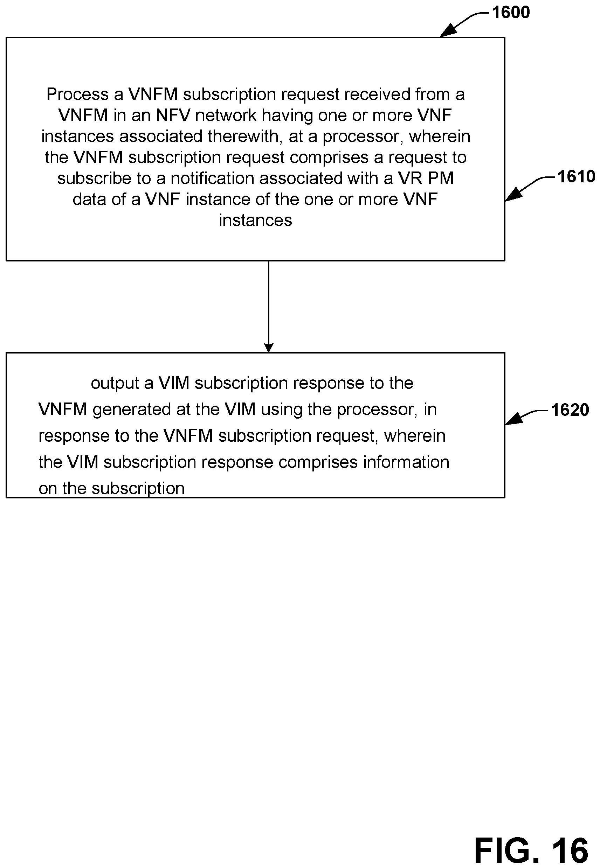

**Fig. 16** illustrates a flowchart of a method for a Virtualized Infrastructure Manager (VIM) of a network function virtualization network, that facilitates to subscribe to notifications associated with virtualized resources (VR) performance measurement (PM) data of one or more virtual network function (VNF) instances of the NFV network, according to various embodiments of the disclosure.

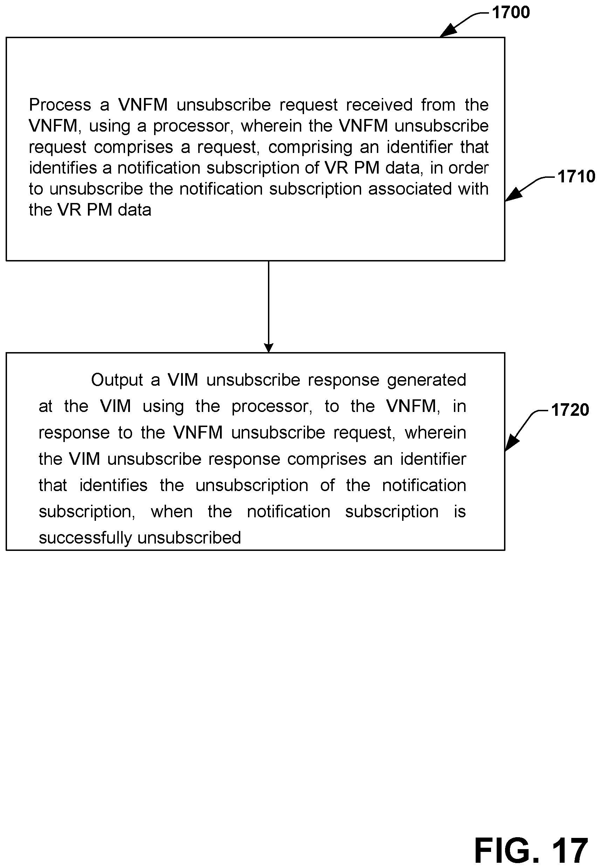

**Fig. 17** illustrates a flowchart of a method for a Virtualized Infrastructure Manager (VIM) of a network function virtualization network, that facilitates to unsubscribe to notifications associated with virtualized resources (VR) performance measurement (PM) data of one or more virtual network function (VNF) instances of the NFV network, according to various embodiments of the disclosure.

### DETAILED DESCRIPTION

In one embodiment of the disclosure, an apparatus configured to be employed within a network manager (NM), comprising one or more processors and a memory is disclosed. The memory includes instructions, for execution via the one or more processing units, to perform an operation comprising outputting a network manager (NM) subscription request generated at the NM, to an element manager (EM) in a network function virtualization (NFV) network having one or more virtual network function (VNF) instances associated therewith, wherein the NM subscription request comprises a request to subscribe to a notification associated with a virtualization resources (VR) performance measurement (PM) data of a VNF instance of the one or more VNF instances, wherein the VNF instance implements a network function associated with an evolved packet core (EPC) network. The memory further includes instructions, for execution via the one or more processing units, to perform an operation comprising processing an EM subscription response received from the EM, in response to the NM subscription request, wherein the EM subscription response comprises information on a result of the subscription.

In one embodiment of the disclosure, an apparatus configured to be employed within an element manager (EM), comprising one or more processors and a memory is disclosed. The memory includes instructions, for execution via the one or more processing units, to perform an operation comprising outputting an EM subscription request generated at the EM, to a virtualized network function manager (VNFM) in a network function virtualization (NFV) network having one or more virtual network function (VNF) instances associated therewith, wherein the EM subscription request comprises a request to subscribe to a notification associated with a virtualization resources (VR) performance measurement (PM) data of a VNF instance of the one or more VNF instances, wherein the VNF instance implements a network function associated with an evolved packet core (EPC) network. The memory further includes instructions, for execution via the one or more processing units, to perform an operation comprising processing a VNFM subscription response received from the VNFM, in response to the EM subscription request, wherein the VNFM subscription response comprises an identifier that identifies a notification subscription that is successfully subscribed.

In one embodiment of the disclosure, an apparatus configured to be employed within a virtualized network function manager (VNFM), comprising one or more processors and a memory is disclosed. The memory includes instructions, for execution via the one or more processing units, to perform an operation comprising processing an element manager (EM) subscription request received from an EM in a network function virtualization (NFV) network having one or more virtual network function (VNF) instances associated therewith, wherein the EM subscription request comprises a request to subscribe to a notification associated with a virtualization resources (VR) performance measurement (PM) data of a VNF instance of the one or more VNF instances, wherein the VNF instance implements a network function associated with an evolved packet core (EPC) network. The memory further includes instructions, for execution via the one or more processing units, to perform an operation comprising outputting a VNFM subscription response to the EM, in response to the EM subscription request, wherein the VNFM subscription response comprises information on the subscription.

In one embodiment of the disclosure, an apparatus configured to be employed within a virtualized infrastructure manager (VIM), comprising one or more processors and a memory is disclosed. The memory includes instructions, for execution via the one or more processing units, to perform an operation comprising processing a virtualized network function manager (VNFM) subscription request received from a VNFM in a network function virtualization (NFV) network having one or more virtual network function (VNF) instances associated therewith, wherein the VNFM subscription request comprises a request to subscribe to a notification associated with a virtualization resources (VR) performance measurement (PM) data of a VNF instance of the one or more VNF instances wherein the VNF instance implements a network function associated with an evolved packet core (EPC) network. The memory further includes instructions, for execution via the one or more processing units, to perform an operation comprising outputting a VIM subscription response to the VNFM, in response to the VNFM subscription request, wherein the VIM subscription response comprises information on the subscription.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

Embodiments described herein may be implemented into a system using any suitably configured hardware and/or software. **FIG.** 1 illustrates components of a network in accordance with some embodiments. In various aspects, part(s) or all of one or more of the components illustrated in connection with FIG. 1 can be implemented as virtual network functions (VNFs) in connection with various aspects described herein. An Evolved Packet Core (EPC) network 100 is shown to include a Home Subscriber Server (HSS) 110, a Mobility Management Entity (MME) 120, a Serving GateWay (SGW) 130, a Packet Data Network (PDN) GateWay (PGW) 140, a Policy and Charging Rules Function (PCRF) 150.

The HSS 110 comprises one or more databases for network users, including subscription-related information to support the network entities' handling of communication sessions. For example, the HSS 110 may provide support for routing/roaming, authentication, authorization, naming/addressing resolution, location dependencies, etc. The EPC network 100 may comprise one or several HSSs 110, depending on the number of mobile subscribers, on the capacity of the equipment, on the organization of the network, etc.

The MME 120 is similar in function to the control plane of legacy Serving General packet radio service (GPRS) Support Nodes (SGSN). The MMEs 120 manage mobility aspects in access such as gateway selection and tracking area list management. The EPC network 100 may comprise one or several MMEs 120

The SGW 130 terminates the interface toward an Evolved UMTS (Universal Mobile Telecommunications System) Terrestrial Radio Access Network (E-UTRAN), and routes data packets between the E-UTRAN and the EPC network 100. In addition, the SGW 130 may be a local mobility anchor point for inter-eNodeB handovers and also may provide an anchor for inter-3GPP mobility. Other responsibilities may include lawful intercept, charging, and some policy enforcement.

The PGW 140 terminates an SGi interface toward the PDN. The PGW 140 routes data packets between the EPC network 100 and external networks, and may be a node for policy enforcement and charging data collection. The PCRF 150 is the policy and charging control element of the EPC network 100. In a non-roaming scenario, there may be a single PCRF in the Home Public Land Mobile Network (HPLMN) associated with a User Equipment's (UE) Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 150 may be communicatively coupled to an application server (alternatively referred to as application function (AF)). Generally, the application server is an element offering applications that use Internet Protocol (IP) bearer resources with the core network (e.g., UMTS Packet Services (PS) domain, Long Term Evolution (LTE) PS data services, etc.). The application server may signal the PCRF 150 to indicate a new service flow and selecting the appropriate Quality of Service (QoS) and charging parameters. The PCRF 150 may provision this rule into a Policy and Charging Enforcement Function (PCEF) (not shown) with the appropriate traffic flow template (TFT) and QoS class of identifier (QCI), which commences the QoS and charging as specified by the application server.

The components of the EPC 100 may be implemented in one physical node or separate physical nodes. In some embodiments, Network Functions Virtualization (NFV) is utilized to virtualize any or all of the above described network node functions via executable instructions stored in one or more computer readable storage mediums (described in further detail below). A logical instantiation of the EPC network 100 may be referred to as a network slice 101. A logical instantiation of a portion of the EPC network 100 may be referred to as a network sub-slice 102 (e.g., the network sub-slice 102 is shown to include the PGW 140 and the PCRF 150).

**FIG. 2** is a block diagram illustrating components, according to some example embodiments, able to read instructions from a machine-readable or computer-readable medium (e.g., a machine-readable storage medium) and perform any one or more of the methodologies discussed herein. Specifically, FIG. 2 shows a diagrammatic representation of hardware resources 200 including one or more processors (or processor cores) 210, one or more memory/storage devices 220, and one or more communication resources 230, each of which are communicatively coupled via a bus 240. For embodiments where node virtualization (e.g., NFV) is utilized, a hypervisor 202 may be executed to provide an execution environment for one or more network slices/sub-slices to utilize the hardware resources 200.

The processors 210 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 212 and a processor 214. The memory/storage devices 220 may include main memory, disk storage, or any suitable combination thereof.

The communication resources 230 may include interconnection and/or network interface components or other suitable devices to communicate with one or more peripheral devices 204 and/or one or more databases 206 via a network 208. For example, the communication resources 230 may include wired communication components (e.g., for coupling via a Universal Serial Bus (USB)), cellular communication components, Near Field Communication (NFC) components, Bluetooth^{®} components (e.g., Bluetooth^{®} Low Energy), Wi-Fi^{®} components, and other communication components.

Instructions 250 may comprise software, a program, an application, an applet, an app, or other executable code for causing at least any of the processors 210 to perform any one or more of the methodologies discussed herein. The instructions 250 may reside, completely or partially, within at least one of the processors 210 (e.g., within the processor's cache memory), the memory/storage devices 220, or any suitable combination thereof. Furthermore, any portion of the instructions 250 may be transferred to the hardware resources 200 from any combination of the peripheral devices 204 and/or the databases 206. Accordingly, the memory of processors 210, the memory/storage devices 220, the peripheral devices 204, and the databases 206 are examples of computer-readable and machine-readable media.

Various embodiments described herein can facilitate to subscribe or unsubscribe to notifications associated with virtualized resources (VR) performance measurement (PM) data of Virtualized Network Functions (VNFs) deployed in a network function virtualization infrastructure (NFVI) of a network function virtualization (NFV) network.

The performance of an application software is tightly coupled to the hardware resource on which the application software is running. For example, this can be when a web application is running so slowly that it may take minutes to display the web page that contains multimedia content, such as pictures, video, audio, text, etc. When this happens, a common response is to launch a task manager to see how the computer hardware is performing. The task manager can display the statistics of CPU, memory, disc, and network (i.e. WiFi, or Ethernet) usages.

The following are a few example scenarios that can be found from the task manager: (1) CPU 100%, memory 100%, network 70%, which may indicate that the computer is using all its resources to process the multimedia content; (2) CPU 10%, memory 40%, network 10%, which may indicate that the application server is too busy to provide the content on time; or (3) CPU 5%, memory 85%, network 30%, which may indicate that the application is pending on the availability of certain resources (e.g., memory) that have been exhausted due to unknown reasons.

These different scenarios can result from different circumstances, each of which can be analogous to scenarios that can occur in connection with Network Function Virtualization (NFV). To insure that the VNFs deployed on the NFV infrastructure (NFVI) is able to deliver a consistent and acceptable service quality to end users, as well as to isolate and correct failure conditions at the most timely manner, the virtualized resource (VR) performance measurements (PM) associated with the VNFs are required. These performance measurements need to reflect the way VNFs are impacted by the NFVI services, and the inherent nature of the services being offered by the NFVI, for example, CPU, Virtual Machines, memory, and Virtual Networks.

A performance measurement (PM) job is created to collect the VNF related VR PM data. The PM job would contain information elements, such as resource type - the resource where the performance measurement is to be collected, collection period - how often the measurement is to be collected, and reporting period - how often the measurement is to be reported. When the performance measurements (i.e., the VR PM data) are available, a data availability notification associated with a respective VNF is generated within the NFV network. However, to identify a possible issue from the VR PM data, operators need to first collect VR PM data for days, weeks, or even months, and then sift through tons of data that may be time consuming and costly due to the processing power involved. Even though a problem may be determined from the PM data mining, it may be too late for mitigation, since the network traffic fluctuates dynamically. Therefore, in order to enable determination of possible issues from the VR PM data in a timely manner, one or more thresholds are created to reduce the number of measurements collected. In such embodiments, a threshold crossing notification is generated within the NFV network when the VR PM data crosses or reaches the thresholds.

Embodiments herein relate to subscription and un-subscription mechanisms that facilitate to subscribe or unsubscribe to the data available notification and threshold crossing notification associated with the VNFs. The generated notifications will only be send to one or more entities with the NFV network that subscribe to the notification. In particular, in one embodiment of the disclosure, an apparatus and a method to perform subscription and un-subscription of the data availability notification associated with a VNF is disclosed. In another embodiment of the disclosure, an apparatus and a method to perform subscription and un-subscription of the threshold crossing notification associated with a VNF related VR PM data is disclosed.

Referring to **FIG. 3****,** illustrated is a diagram of a network function virtualization (NFV) system/network 300 that facilitates to subscribe or unsubscribe to the notifications associated with virtualized resources (VR) performance measurement (PM) data of one or more virtual network function (VNF) instances associated therewith, in connection with various aspects described herein. The system illustrated in FIG. 1 comprises a Network Manager (NM) 302, Network Function Virtualization (NFV) Orchestrator (NFVO) 304, Element Manager (EM) 306, a set of Virtualized Network Functions (VNFs), for example VNF1 308a and VNF2 308b running on the Virtualization Resources (VRs) of a NFV Infrastructure (NFVI) 308, a VNF Manager (VNFM) 310, and a Virtualized Infrastructure Manager (VIM) 312. The solid lines between these entities indicate the various reference points that facilitate data exchange between these entities. In some embodiments, the reference points enable the various entities to perform the subscription and un-subscriptions of the notifications associated with the PM jobs.

For example, the reference point Ve-Vnfm-Em 309 between the EM 306 and the VNFM 310 facilitates a signal/data flow between the EM 306 and the VNFM 310, the reference point Itf-N 303 between the NM 302 and the EM 306 facilitates a signal/data flow between the NM 302 and the EM 306, the reference point Vi-Vnfm 311 between the VNFM 310 and the VIM 312 facilitates a signal/data flow between the VNFM 310 and the VIM 312, and the reference point Nf-Vi 307 between the VIM 312 and the NFVI 308 facilitates a signal/data flow between the VIM 312 and the NFVI 308.

In some embodiments, the NFV network 300 enables to perform subscription and un-subscription of a data availability notification associated with the VR PM data of a VNF instance. In other embodiments, the NFV network 300 enables to perform subscription and un-subscription of a threshold crossing notification associated with the VR PM data of a VNF instance. In such embodiments, the various reference points, for example, Ve-Vnfm-Em 309, Itf-N 303, Vi-Vnfm 311, Nf-Vi 307 etc. support a capability to perform a signal/data flow associated with the subscription and un-subscription operations. Further, the various reference points support a capability to send notifications associated with the VR PM data (e.g., the data availability notification and the threshold crossing notification). The signal flow associated with the subscription and un-subscription operations are described in detail in subsequent embodiments below.

**Fig. 4** illustrates an example flow diagram that depicts the signal flow between the various entities in a network function virtualization (NFV) network 400 that facilitates to subscribe to notifications associated with the virtualized resources (VR) performance measurement (PM) data of a virtualized network function (VNF) instance, according to various aspects described herein. The NFV network 400 comprises a network manager (NM) 402, an element manager (EM) 404, a virtualized network function manager (VNFM) 406 and a virtualized infrastructure manager (VIM) 408. In some embodiments, the NFV network 400 further comprises an NFV infrastructure (NFVI) with virtualized network functions (VNFs) deployed using the virtualized resources of the NFVI (not shown). In some embodiments, the NFV network 400 is similar to the NFV network 300 described above with respect to Fig. 3. In some embodiments, the NFV network 400 further facilitates to unsubscribe to notifications already subscribed. The signal flow that facilitates the unsubscription operation is explained in a further embodiment below.

In some embodiments, in order to subscribe to notifications associated with virtualized resources (VR) PM data of a virtualized network function (VNF) instance of the NFV network 400, the NM 402 within the NFV network 400 is configured to initiate a signal flow associated therewith. In some embodiments, the notifications associated with the VR PM data comprises data availability notification of the VR PM data of the VNF instance. In other embodiments, the notifications associated with the VR PM data comprises threshold crossing notification of the VR PM data. The data availability notification indicates an availability of VR PM data associated with a PM job configured to collect the VR PM data of the VNF instance and the threshold crossing notification indicates that the VR PM data associated with the VNF instance crossed or reached a threshold associated with the VR PM data. In some embodiments, one or more thresholds for the VR PM data are defined in order to facilitate monitoring the performance measurements of the VNF instance such that the number of performance measurements collected can be reduced. That is, only the performance measurements (i.e., the VR PM data) that crosses or reaches the threshold are utilized for further processing.

In some embodiments, in order to subscribe to a **data availability notification** associated with the VR PM data, the NM 402 is configured to send/output an NM subscription request 410 the EM 404. In some embodiments, the NM subscription request 410 is generated at the NM 402 and comprises a request to subscribe to a data availability notification of the VR PM data associated with the performance measurement (PM) job. In some embodiments, the NM subscription request 410 comprises a parameter, notification categories, that identifies one or more notification categories (e.g., data availability notification) and a parameter, filter, that specifies a filter constraint to be used to filter notifications specified in the notification categories parameter. In some embodiments, the NM subscription request 410 further comprises parameters that include, managerReference, that specifies the reference of NM (e.g., the NM 402) to which the notifications shall be sent and timeTick, that specifies the value of a timer hold for the NM (e.g., the NM 402).

In some embodiments, the EM 404 is configured to send/output an EM subscription request 412 comprising a request to subscribe to the data availability notification of the VR PM data, to the VNFM 406. In some embodiments, the EM subscription request 412 is generated at the EM 404, based on the received NM subscription request 410. In some embodiments, the EM subscription request 412 further includes a parameter, filter, that identifies information associated with the notification subscription (e.g., the VNF instance, type and attribute of the notification). In some embodiments, the VNFM 406 is configured to send/output a VNFM subscription request 414 comprising a request to subscribe to the data availability notification of the VR PM data, to the VIM 408. In some embodiments, the VNFM subscription request 414 is generated at the VNFM 406, based on the received EM subscription request 412. In some embodiments, the VNFM subscription request 414 further includes a parameter, filter, that identifies information associated with the notification subscription (e.g., the VNF instance, type and attribute of the notification).

Upon receiving the VNFM subscription request 414, the VIM 408 is configured to send/output a VIM subscription response 416 to the VNFM 406. In some embodiments, the VIM subscription response 416 is generated at the VIM 408 and comprises an identifier, subscription Id that identifies the data availability notification subscription that is successfully subscribed. In some embodiments, if the data availability notification subscription is not successful, the VIM subscription response 416 may not comprise the identifier, subscription Id, that identifies the data availability notification subscription. Upon receiving the VIM subscription response 416, the VNFM 406 is configured to send/output a VNFM subscription response 418 to the EM 404. In some embodiments, the VNFM subscription response 418 is generated at the VNFM 406, based on the received VIM subscription response 416. In some embodiments, the VNFM subscription response 418 comprises an identifier, subscription Id, that identifies the data availability notification subscription that is successfully subscribed. In some embodiments, if the data availability notification subscription is not successful, the VNFM subscription response 418 may not comprise the identifier, subscription Id, that identifies the data availability notification subscription.

Upon receiving the VNFM subscription response 418, the EM 404 is configured to send/output an EM subscription response 420 to the NM 402. In some embodiments, the EM subscription response 420 is generated at the EM 404, based on the received VNFM subscription response 418. In some embodiments, the EM subscription response 418 comprises a parameter, status, indicating a result (e.g., success or failure) of the data availability notification subscription. In some embodiments, the EM subscription response 418 further comprises an identifier, subscription Id, that identifies the data availability notification subscription that is successfully subscribed. In some embodiments, if the data availability notification subscription is not successful, the EM subscription response 420 may not comprise the identifier, subscription Id, that identifies the data availability notification subscription. Once the data availability notification is successfully subscribed, the VIM 426 is configured to send/output a VIM notification 426 comprising the data availability notification, to the VNFM 406, when VR PM data associated with the PM job is available. Upon receiving the VIM notification 426, the VNFM 424 is configured to send/output a VNFM notification 424 comprising the data availability notification, to the EM 406. Further, the EM 404 is configured to send/output an EM notification 422 comprising the data availability notification, to the NM 402.

In some embodiments, in order to subscribe to a **threshold crossing notification** of one or more thresholds associated with the VR PM data, the NM 402 is configured to send/output an NM subscription request 410 the EM 404. In some embodiments, the NM subscription request 410 is generated at the NM 402 and comprises a request to subscribe to a threshold crossing notification of one or more thresholds associated the VR PM data, in order to receive the threshold crossing notification when the VR PM data crosses or reaches a threshold. In some embodiments, the NM subscription request 410 comprises a parameter, notification categories, that identifies one or more notification categories (e.g., threshold crossing notification) and a parameter, filter, that specifies a filter constraint to be used to filter notifications specified in the notification categories parameter. In some embodiments, the NM subscription request 410 further comprises parameters that include, managerReference, that specifies the reference of NM (e.g., the NM 402) to which the notifications shall be sent and timeTick, that specifies the value of a timer hold for the subject NM (e.g., the NM 402).

In some embodiments, the EM 404 is configured to send/output an EM subscription request 412 comprising a request to subscribe to the threshold crossing notification of the VR PM data, to the VNFM 406. In some embodiments, the EM subscription request 412 is generated at the EM 404, based on the received NM subscription request 410. In some embodiments, the EM subscription request 412 further includes a parameter, filter, that identifies information associated with the notification subscription (e.g., the VNF instance, type and attribute of the notification). Upon receiving the EM subscription request 412, the VNFM 406 is configured to send/output a VNFM subscription request 414 to the VIM 408. In some embodiments, the VNFM subscription request 414 is generated at the VNFM 406, based on the received EM subscription request 412. In some embodiments, the VNFM subscription request 414 comprises a request to subscribe to the threshold crossing notification of the VR PM data and includes a parameter, filter, that identifies information associated with the notification (e.g., the VNF instance, type and attribute of the notification).

Upon receiving the VNFM subscription request 414, the VIM 408 is configured to send/output a VIM subscription response 416 to the VNFM 406. In some embodiments, the VIM subscription response 416 is generated at the VIM 408 and comprises an identifier, subscription Id that identifies the threshold crossing notification subscription that is successfully subscribed. In some embodiments, if the threshold crossing notification subscription is not successful, the VIM subscription response 416 may not comprise the identifier, subscription Id, that identifies the threshold crossing notification subscription. Upon receiving the VIM subscription response 416, the VNFM 406 is configured to send/output a VNFM subscription response 418 to the EM 404. In some embodiments, the VNFM subscription response 418 is generated at the VNFM 406, based on the received VIM subscription response 416. In some embodiments, the VNFM subscription response 418 comprises an identifier, subscription Id, that identifies the threshold crossing notification subscription that is successfully subscribed. In some embodiments, if the threshold crossing notification subscription is not successful, the VNFM subscription response 418 may not comprise the identifier, subscription Id, that identifies the threshold crossing notification subscription.

Upon receiving the VNFM subscription response 418, the EM 404 is configured to send/output a EM subscription response 420 to the NM 402. In some embodiments, the EM subscription response 420 is generated at the EM 404, based on the received VNFM subscription response 418. In some embodiments, the EM subscription response 418 comprises a parameter, status, indicating a result (e.g., success or failure) of the threshold crossing notification subscription. In some embodiments, the EM subscription response 418 further comprises an identifier, subscription Id, that identifies the threshold crossing notification subscription that is successfully subscribed. In some embodiments, if the threshold crossing notification subscription is not successful, the EM subscription response 420 may not comprise the identifier, subscription Id, that identifies the threshold crossing notification subscription. Once the threshold crossing notification is successfully subscribed, the VIM 408 is configured to send/output a VIM notification 426 comprising the threshold crossing notification, to the VNFM 406, when the threshold associated with the VR PM data is crossed or reached (i.e., when the VR PM data crosses or reaches the threshold). Upon receiving the VIM notification 426, the VNFM 406 is configured to send/output a VNFM notification 424 comprising the threshold crossing notification, to the EM 406. Further, the EM 404 is configured to send/output an EM notification 422 comprising the threshold crossing notification, to the NM 402.

The Table 1 below indicates an example use case of a subscription of notifications associated with VR PM data, according to one embodiment of the disclosure.

| **Use case stage** | **Evolution/Specification** | **<<Uses>> Related use** |
|---|---|---|
| **Goal** | Enable NM to subscribe the notification for the VNF related VR performance measurement. | |
| **Actors and Roles** | NM. | |
| **Telecom resources** | NM, EM, VNFM, VIM | |
| **Assumptions** | The VNF instance is in operation. | |
| **Pre-conditions** | | |
| **Begins when** | NM decides to subscribe the VNF performance measurement related to VR. | |
| **Act 1 (M)** | NM sends a request to EM to subscribe the VNF performance measurement related to VR. | |
| **Act 2 (M)** | EM sends a request to VNFM to subscribe the VNF related VR performance Measurements. | |
| **Act 3 (M)** | VNFM sends a response to EM with the identifiers of the subscription. | |
| **Act 4 (M)** | EM sends a response to NM to indicate the result of the subscription. | |
| **Ends when (*)** | NM receives the response. | |
| **Post-conditions** | The notification of the VNF performance measurement related to VR id subscribed. | |

The Table 2 below indicates an example use case of a subscription of notifications associated with VR PM data, according to another embodiment of the disclosure.

| **Use case stage** | **Evolution/Specification** | **<<Uses>> Related use** |
|---|---|---|
| **Goal** | Enable NM to subscribe the notification for the VNF performance measurement related to VR. | |
| **Actors and Roles** | NM. | |
| **Telecom resources** | NM, EM | |
| **Assumptions** | The VNF instance is in operation. | |
| **Pre-conditions** | | |
| **Begins when** | NM decides to subscribe the VNF performance measurement related to VR. | |
| **Act 1 (M)** | NM sends a request to EM to subscribe the VNF performance measurement related to VR. | |
| **Act 2 (M)** | EM sends a response to NM to indicate the result of the subscription. | |
| **Ends when (*)** | NM receives the response. | |
| **Exceptions** | | |
| **Post-conditions** | NM has subscribed the notification of the VNF performance measurement related to VR. | |
| **Traceability (*)** | FFS | |

The Table 3 below indicates an example use case of a subscription of notifications associated with VR PM data, according to another embodiment of the disclosure.

| **Use case stage** | **Evolution/Specification** | **<<Uses>> Related use** |
|---|---|---|
| **Goal** | Enable EM to subscribe the notification for the VNF performance measurement related to VR. | |
| **Actors and Roles** | EM. | |
| **Telecom resources** | EM, VNFM | |
| **Assumptions** | The VNF instance is in operation. | |
| **Pre-conditions** | | |
| **Begins when** | EM decides to subscribe the VNF performance measurement related to VR. | |
| **Act 1 (M)** | EM sends a request to VNFM to subscribe the VNF related VR performance measurements. | |
| **Act 2 (M)** | VNFM sends a response to EM with the identifiers of the subscription. | |
| **Ends when (*)** | EM receives the response. | |
| **Exceptions** | | |
| **Post-conditions** | EM has subscribed the notification of the VNF performance measurement related to VR. | |
| **Traceability (*)** | REQ-NFV-PM-FUN-12 | |

Fig. 5 illustrates an example flow diagram that depicts the signal flow between the various entities in a network function virtualization (NFV) network 500 that facilitates to unsubscribe to notifications associated with the virtualized resources (VR) performance measurement (PM) data of a virtualized network function (VNF) instance, according to various aspects described herein. The NFV network 500 comprises a network manager (NM) 502, an element manager (EM) 504, a virtualized network function manager (VNFM) 506 and a virtualized infrastructure manager (VIM) 508. In some embodiments, the NFV network 500 further comprises an NFV infrastructure (NFVI) with virtualized network functions (VNFs) deployed using the virtualized resources of the NFVI (not shown). In some embodiments, the NFV network 500 facilitates to unsubscribe to the notifications subscribed using the signal flow explained in Fig. 4 above. In some embodiments, the NFV network 500 is similar to the NFV network 400 described above with respect to Fig. 4 and can further perform the subscription operations as indicated above with respect to Fig. 4.

In some embodiments, in order to unsubscribe to notification subscriptions associated with virtualized resources (VR) PM data of a virtualized network function (VNF) instance of the NFV network 500, the NM 502 within the NFV network 500 is configured to initiate a signal flow associated therewith. In such embodiments, it is assumed that the notifications associated with the VR PM data are already subscribed. In some embodiments, the notification subscriptions associated with the VR PM data comprises data availability notification subscription of the VR PM data of the VNF instance. In other embodiments, the notifications associated with the VR PM data comprises threshold crossing notification subscription of the VR PM data. In some embodiments, the notification subscriptions are unsubscribed, when the notifications associated with the VR PM data is no longer required.

In some embodiments, in order to unsubscribe to a **data availability notification** associated with the VR PM data, the NM 502 is configured to send/output an NM unsubscribe request 510 the EM 504. In some embodiments, the NM unsubscribe request 510 is generated at the NM 502 and comprises a request to unsubscribe to a data availability notification of the VR PM data associated with a performance measurement (PM) job. In some embodiments, the NM unsubscribe request 510 comprises an identifier, subscriptionld, that identifies the data availability notification subscription that is to be unsubscribed and a parameter, managerReference, that identifies the NM 502 that sends the unsubscribe request. In some embodiments, the EM 504 is configured to send/output an EM unsubscribe request 512 comprising a request to unsubscribe to the data availability notification of the VR PM data, to the VNFM 506. In some embodiments, the EM subscription request 512 is generated at the EM 504, based on the received NM unsubscribe request 510. In some embodiments, the EM unsubscribe request 512 further includes an identifier, for example, subscriptionld, that identifies the data availability notification subscription that is to be unsubscribed.

Upon receiving the EM unsubscribe request 512, the VNFM 506 is configured to send/output a VNFM unsubscribe request 514 to the VIM 508. In some embodiments, the VNFM unsubscribe request 514 is generated at the VNFM 506, based on the received EM unsubscribe request 512. In some embodiments, the VNFM unsubscribe request 514 comprises a request to unsubscribe to the data availability notification of the VR PM data and includes an identifier, for example, subscriptionld, that identifies the data availability notification subscription that is to be unsubscribed. Upon receiving the VNFM unsubscribe request 514, the VIM 508 is configured to send/output a VIM unsubscribe response 516 to the VNFM 506. In some embodiments, the VIM unsubscribe response 516 is generated at the VIM 508 and comprises an identifier that identifies the unsubscription of the data availability notification subscription that is successfully unsubscribed. In some embodiments, if the data availability notification subscription is not successfully unsubscribed, the VIM unsubscribe response 516 may not comprise the identifier that identifies the unsubscription of the data availability notification subscription.

Upon receiving the VIM unsubscribe response 516, the VNFM 506 is configured to send/output a VNFM unsubscribe response 518 to the EM 504. In some embodiments, the VNFM unsubscribe response 518 is generated at the VNFM 506, based on the received VIM unsubscribe response 516. In some embodiments, the VNFM unsubscribe response 518 comprises an identifier that identifies the unsubscription of the data availability notification subscription that is successfully unsubscribed. In some embodiments, if the data availability notification subscription is not successfully unsubscribed, the VNFM unsubscribe response 518 may not comprise the identifier that identifies the unsubscription of the data availability notification subscription. Upon receiving the VNFM unsubscribe response 518, the EM 504 is configured to send/output an EM unsubscribe response 520 to the NM 502. In some embodiments, the EM unsubscribe response 520 is generated at the EM 504, based on the received VNFM unsubscribe response 518. In some embodiments, the EM unsubscribe response 520 comprises a parameter, status, indicating a result (e.g., success or failure) of the data availability notification unsubscription.

In some embodiments, in order to unsubscribe to a **threshold crossing notification** associated with the VR PM data, the NM 502 is configured to send/output an NM unsubscribe request 510 the EM 504. In some embodiments, the NM unsubscribe request 510 is generated at the NM 502 and comprises a request to unsubscribe to a threshold crossing notification of one or more thresholds associated the VR PM data. In some embodiments, the NM unsubscribe request 510 comprises an identifier, subscriptionld, that identifies the threshold crossing notification subscription that is to be unsubscribed and a parameter, managerReference, that identifies the NM 502 that sends the unsubscribe request. In some embodiments, the EM 504 is configured to send/output an EM unsubscribe request 512 comprising a request to unsubscribe to the threshold crossing notification of the VR PM data, to the VNFM 506. In some embodiments, the EM unsubscribe request 512 is generated at the EM 504, based on the received NM unsubscribe request 510. In some embodiments, the EM unsubscribe request 512 further includes an identifier, for example, subscriptionld, that identifies the threshold crossing notification subscription that is to be unsubscribed.

Upon receiving the EM unsubscribe request 512, the VNFM 506 is configured to send/output a VNFM unsubscribe request 514 to the VIM 508. In some embodiments, the VNFM unsubscribe request 514 is generated at the VNFM 506, based on the received EM unsubscribe request 512. In some embodiments, the VNFM unsubscribe request 514 comprises a request to unsubscribe to the threshold crossing notification of the VR PM data and includes an identifier, for example, subscriptionld, that identifies the threshold crossing notification subscription that is to be unsubscribed. Upon receiving the VNFM unsubscribe request 514, the VIM 508 is configured to send/output a VIM unsubscribe response 516 to the VNFM 506. In some embodiments, the VIM unsubscribe response 516 is generated at the VIM 508 and comprises an identifier that identifies the unsubscription of the threshold crossing notification subscription that is successfully unsubscribed. In some embodiments, if the threshold crossing notification subscription is not successfully unsubscribed, the VIM unsubscribe response 516 may not comprise the identifier that identifies the unsubscription of the threshold crossing notification subscription. In some embodiments, the identifier that identifies the threshold crossing notification subscription and the identifier that identifies the threshold crossing notification unsubscription are different.

Upon receiving the VIM unsubscribe response 516, the VNFM 506 is configured to send/output a VNFM unsubscribe response 518 to the EM 504. In some embodiments, the VNFM unsubscribe response 518 is generated at the VNFM 506, based on the received VIM unsubscribe response 516. In some embodiments, the VNFM unsubscribe response 518 comprises an identifier that identifies the unsubscription of the threshold crossing notification subscription that is successfully unsubscribed. In some embodiments, if the threshold crossing notification subscription is not successfully unsubscribed, the VNFM unsubscribe response 518 may not comprise the identifier that identifies the unsubscription of the threshold crossing notification subscription. Upon receiving the VNFM unsubscribe response 518, the EM 504 is configured to send/output an EM unsubscribe response 520 to the NM 502. In some embodiments, the EM unsubscribe response 520 is generated at the EM 504, based on the received VNFM unsubscribe response 518. In some embodiments, the EM unsubscribe response 520 comprises a parameter, status, indicating a result (e.g., success or failure) of the threshold crossing notification unsubscription.

The Table 4 below indicates an example use case of an unsubscription of notification subscriptions associated with VR PM data, according to one embodiment of the disclosure.

| **Use case stage** | **Evolution/Specification** | **<<Uses>> Related use** |
|---|---|---|
| **Goal** | Enable NM to unsubscribe the notification for the VNF performance measurement related to VR. | |
| **Actors and Roles** | NM. | |
| **Telecom resources** | NM, EM, VNFM, VIM | |
| **Assumptions** | The VNF instance is in operation. | |
| **Pre-conditions** | | |
| **Begins when** | NM decides to unsubscribe the VNF performance measurement related to VR. | |
| **Act 1 (M)** | NM sends a request to EM with the identifier of subscription to unsubscribe the VNF performance measurement related to VR. | |
| **Act 2 (M)** | EM sends a request to VNFM with the identifier of subscription to unsubscribe the VNF related VR performance measurements. | |
| **Act 3 (M)** | VNFM sends a response to EM with the identifiers of the un-subscription that has been unsubscribed. | |
| **Act 4 (M)** | EM sends a response to NM to indicate the result of the un-subscription. | |
| **Ends when (*)** | NM receives the response. | |
| **Exceptions** | | |
| **Post-conditions** | The notification of the VR PM data is unsubscribed. | |
| **Traceability (*)** | FFS | |

The Table 5 below indicates an example use case of an unsubscription of notification subscriptions associated with VR PM data, according to another embodiment of the disclosure.

| **Use case stage** | **Evolution/Specification** | **<<Uses>> Related use** |
|---|---|---|
| **Goal** | Enable NM to unsubscribe the notification for the VNF performance measurement related to VR. | |
| **Actors and Roles** | NM. | |
| **Telecom resources** | NM, EM | |
| **Assumptions** | The VNF instance is in operation. | |
| **Pre-conditions** | | |
| **Begins when** | NM decides to unsubscribe the VNF performance measurement related to VR. | |
| **Act 1 (M)** | NM sends a request to EM with the identifier of subscription to unsubscribe the VNF performance measurement related to VR. | |
| **Act 2 (M)** | EM sends a response to NM to indicate the result of the un-subscription. | |
| **Ends when (*)** | NM receives the response. | |
| **Exceptions** | | |
| **Post-conditions** | NM has unsubscribed the notification of the VNF performance measurement related to VR. | |
| **Traceability (*)** | FFS | |

The Table 6 below indicates an example use case of an unsubscription of notification subscriptions associated with VR PM data, according to another embodiment of the disclosure.

| **Use case stage** | **Evolution/Specification** | **<<Uses>> Related use** |
|---|---|---|
| **Goal** | Enable EM to unsubscribe the notification for the VNF performance measurement related to VR. | |
| **Actors and Roles** | EM. | |
| **Telecom resources** | EM, VNFM | |
| **Assumptions** | The VNF instance is in operation. | |
| **Pre-conditions** | | |
| **Begins when** | EM decides to unsubscribe the VNF performance measurement related to VR. | |
| **Act 1 (M)** | EM sends a request to VNFM with the identifier of subscription to unsubscribe the VNF performance measurement related to VR. | |
| **Act 2 (M)** | VNFM sends a response to EM with the identifiers of the un-subscription that has been unsubscribed. | |
| **Ends when (*)** | EM receives the response. | |
| **Exceptions** | | |
| **Post-conditions** | EM has unsubscribed the notification of the VNF performance measurement related to VR. | |
| **Traceability (*)** | REQ-NFV-PM-FUN-13 | |

Referring to **FIG. 6****,** illustrated is a block diagram of an apparatus 600 included within a Network Manager (NM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein. The apparatus 600 is explained herein with respect to the NM 402 of the NFV network 400 in Fig. 4 for subscription and with respect to the NM 502 of the NFV network 500 in Fig. 5 for unsubscription. The apparatus 600 include a processor 610, optional network interface controller (NIC) circuitry 620 (which can facilitate communication of data via one or more networks in some aspects), and a memory 630 (which can comprise any of a variety of storage mediums and can store instructions and/or data associated with at least one of the processor 610 or NIC circuitry 620). In some embodiments, the apparatus 600 includes all the features and the functionalities of the components illustrated in Fig. 2. In some aspects, the processor 610, the NIC circuitry 620, and the memory 630 can be included in a single device, while in other aspects, they can be included in different devices, such as part of a distributed network. In some embodiments, the processor 610 can include one or more processors. As described in greater detail below, apparatus 600 can facilitate to subscribe or unsubscribe to the notifications associated with VR PM data of VNF instances associated with an NFV network.

In some example embodiments, the processor 610 is able to read instructions from a machine-readable or computer-readable medium (e.g., a machine-readable storage medium) and perform the subscription or the unsubscription discussed herein. In order to **subscribe** to a notification associated with a VR PM data of a VNF instance of an NFV network (e.g., the NFV network 400 in Fig. 4), the processor 610 is configured to output a network manager (NM) subscription request (e.g, the NM subscription request 410 in Fig. 4) to an element manager (EM), for example, the EM 404 in Fig. 4, via the NIC circuitry 620. In some embodiments, the NM subscription request comprises a request to subscribe to a notification associated with the VR PM data. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. In some embodiments, the NM subscription request is generated at the processor 610, based on instructions stored in the memory 630. In some embodiments, the processor 610 is further configured to process an EM subscription response (e.g., the EM subscription response 420 in Fig. 4), received from the EM (e.g., the EM 404 in Fig. 4), via the NIC circuitry 620, in response to the NM subscription request. In some embodiments, the EM subscription response comprises parameter, status, indicating a result of the notification subscription and an identifier, subscription Id, that identifies the notification subscription that is successfully subscribed. In some embodiments, once the notification is successfully subscribed, the processor 610 is further configured to receive the notification (e.g., the EM notification 422), from the EM, via the NIC circuitry 620.

Similarly, in some embodiments, in order to **unsubscribe** to a notification subscription associated with the VR PM data that has already been subscribed, the processor 610 is configured to output a network manager (NM) unsubscribe request (e.g., the NM unsubscribe request 510 in Fig. 5) to an element manager (EM), for example, the EM 504 in Fig. 6, via the NIC circuitry 620. In some embodiments, the NM unsubscribe request comprises a request, comprising an identifier, for example, subscriptionld, that identifies a notification subscription of VR PM data, in order to unsubscribe the notification subscription associated with the VR PM data. In some embodiments, the notification subscription associated with the VR PM data comprises a data availability notification subscription of the VR PM data associated with a PM job. In other embodiments, the notification subscription associated with the VR PM data comprises a threshold crossing notification of one or more thresholds associated with the VR PM data. In some embodiments, the NM subscription request is generated at the processor 610, based on instructions stored in the memory 630. In some embodiments, the processor 610 is further configured to process an EM unsubscribe response (e.g., the EM unsubscribe response 520 in Fig. 5), received from the EM (e.g., the EM 504 in Fig. 5), via the NIC circuitry 620, in response to the NM unsubscribe request. In some embodiments, the EM unsubscribe response comprises a parameter, status, indicating a result of the notification unsubscription.

Referring to **FIG. 7****,** illustrated is a block diagram of an apparatus 700 included within an Element Manager (EM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein. The apparatus 700 is explained herein with respect to the EM 404 of the NFV network 400 in Fig. 4 for subscription and with respect to the EM 504 of the NFV network 500 in Fig. 5 for unsubscription. The apparatus 700 include a processor 710, optional network interface controller (NIC) circuitry 720 (which can facilitate communication of data via one or more networks in some aspects), and a memory 730 (which can comprise any of a variety of storage mediums and can store instructions and/or data associated with at least one of the processor 710 or NIC circuitry 720). In some embodiments, the apparatus 700 includes all the features and the functionalities of the components illustrated in Fig. 2. In some aspects, the processor 710, the NIC circuitry 720, and the memory 730 can be included in a single device, while in other aspects, they can be included in different devices, such as part of a distributed network. In some embodiments, the processor 710 can include one or more processors. As described in greater detail below, apparatus 700 can facilitate to subscribe or unsubscribe to the notifications associated with VR PM data of VNF instances associated with an NFV network.

In some example embodiments, the processor 710 is able to read instructions from a machine-readable or computer-readable medium (e.g., a machine-readable storage medium) and perform the subscription or the unsubscription discussed herein. In order to **subscribe** to a notification associated with a VR PM data of a VNF instance of an NFV network (e.g., the NFV network 400 in Fig. 4), the processor 710 is configured to generate an EM subscription request (e.g., the EM subscription request 412 in Fig. 4) comprising a request to subscribe to a notification associated with VR PM data of a VNF instance, and output or provide the generated EM subscription request to a virtualized network function manager (VNFM) (e.g., the VNFM 406 in Fig. 4) associated therewith, via the NIC circuitry 720. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. In some embodiments, the EM subscription request is generated at the processor 710, in accordance with the instructions stored in the memory 730.

In some embodiments, the EM subscription request is generated at the processor 710, upon receiving an NM subscription request (e.g., the NM subscription request 410 in Fig. 4), from the NM (e.g., the NM 402 in Fig. 4). In such embodiments, prior to generating the EM subscription request, the processor 710 is configured to process a network manager (NM) subscription request (e.g., the NM subscription request 410 in Fig. 4) comprising a request to subscribe to a notification associated with VR PM data of a VNF instance, received from the NM (e.g., the NM 402 in Fig. 4), via the NIC circuitry 720. In some embodiments, the NM subscription request comprises a request to subscribe to a data availability notification of the VR PM data associated with a PM job and in other embodiments, the NM subscription request comprises a request to subscribe to a threshold crossing notification of one or more thresholds associated with the VR PM data. In such embodiments, the EM subscription request is generated at the processor 710 based on the received NM subscription request. In some embodiments, the processor 710 is further configured to process a VNFM subscription response (e.g., the VNFM subscription response 418 in Fig. 4), received from the VNFM (e.g., the VNFM 406 in Fig. 4), via the NIC circuitry 720, in response to the EM subscription request. In some embodiments, the VNFM subscription response comprises an identifier that identifies the notification subscription that is successfully subscribed. Upon receiving the VNFM subscription response, in some embodiments, the processor 710 is configured to generate an EM subscription response (e.g., the EM subscription response 420 in Fig. 4) and output the EM subscription response to the NM (e.g., the NM 402 in Fig. 4), via the NIC circuitry 720. In some embodiments, the EM subscription response is generated based on the received VNFM response and the EM subscription response comprises a parameter, status, indicating a result of the notification subscription and an identifier, for example, subscription Id, that identifies the notification subscription that is successfully subscribed. In some embodiments, once the notification is successfully subscribed, the processor 710 is further configured to receive the notification (e.g., the VNFM notification 424), from the VNFM (e.g., the VNFM 406), via the NIC circuitry 720.

Similarly, in some embodiments, in order to **unsubscribe** to a notification subscription associated with the VR PM data that has already been subscribed, the processor 710 is configured to generate an EM unsubscribe request (e.g., the EM unsubscribe request 512 in Fig. 5), and output or provide the generated EM unsubscribe request to a virtualized network function manager (VNFM) (e.g., the VNFM 506 in Fig. 5) associated therewith, via the NIC circuitry 720. In some embodiments, the EM unsubscribe request comprises a request comprising an identifier, for example, subscriptionld, that identifies a notification subscription associated with the VR PM data, in order to unsubscribe the notification subscription. In some embodiments, the notification subscription associated with the VR PM data comprises a data availability notification subscription of the VR PM data associated with a PM job. In other embodiments, the notification subscription associated with the VR PM data comprises a threshold crossing notification of one or more thresholds associated with the VR PM data. In some embodiments, the EM unsubscribe request is generated at the processor 710, in accordance with the instructions stored in the memory 730.

In some embodiments, the EM unsubscribe request is generated at the processor 710, upon receiving an NM unsubscribe request (e.g., the NM unsubscribe request 510 in Fig. 5), from the NM (e.g., the NM 502 in Fig. 5). In such embodiments, prior to generating the EM unsubscribe request, the processor 710 is configured to process a network manager (NM) unsubscribe request (e.g., the NM unsubscribe request 510 in Fig. 5) comprising a request comprising an identifier, for example, subscriptionld, that identifies the notification subscription associated with the VR PM data, to unsubscribe the notification subscription, received from the NM (e.g., the NM 502 in Fig. 5), via the NIC circuitry 720. In some embodiments, the NM unsubscribe request comprises a request to unsubscribe to a data availability notification subscription of the VR PM data associated with a PM job and in other embodiments, the NM unsubscribe request comprises a request to unsubscribe to a threshold crossing notification of one or more thresholds associated with the VR PM data. In such embodiments, the EM unsubscribe request is generated at the processor 710 based on the received NM unsubscribe request.

In some embodiments, the processor 710 is further configured to process a VNFM unsubscribe response (e.g., the VNFM unsubscribe response 518 in Fig. 5), received from the VNFM (e.g., the VNFM 506 in Fig. 5), via the NIC circuitry 720, in response to the EM unsubscribe request. In some embodiments, the VNFM unsubscribe response comprises an identifier that identifies the unsubscription of notification subscription that is successfully unsubscribed. Upon receiving the VNFM unsubscribe response, in some embodiments, the processor 710 is configured to generate an EM unsubscribe response (e.g., the EM unsubscribe response 520 in Fig. 5) and output the EM unsubscribe response to the NM (e.g., the NM 502 in Fig. 5), via the NIC circuitry 720. In some embodiments, the EM unsubscribe response is generated based on the received VNFM unsubscribe response and the EM unsubscribe response comprises a parameter, status, indicating a result of the notification unsubscription.

Referring to **FIG. 8****,** illustrated is a block diagram of an apparatus 800 included within an Virtualized Network Function Manager (VNFM) in a network function virtualization (NFV) network that facilitates to subscribe or unsubscribe to notifications associated with virtualized resources (VR) performance measurement (PM) data of one or more virtual network function (VNF) instances of the NFV network, according to various aspects described herein. The apparatus 800 is explained herein with respect to the VNFM 406 of the NFV network 400 in Fig. 4 for subscription and with respect to the VNFM 506 of the NFV network 500 in Fig. 5 for unsubscription. The apparatus 800 include a processor 810, optional network interface controller (NIC) circuitry 820 (which can facilitate communication of data via one or more networks in some aspects), and a memory 830 (which can comprise any of a variety of storage mediums and can store instructions and/or data associated with at least one of the processor 810 or NIC circuitry 820). In some embodiments, the apparatus 800 includes all the features and the functionalities of the components illustrated in Fig. 2. In some aspects, the processor 810, the NIC circuitry 820, and the memory 830 can be included in a single device, while in other aspects, they can be included in different devices, such as part of a distributed network. In some embodiments, the processor 810 can include one or more processors. As described in greater detail below, apparatus 800 can facilitate to subscribe or unsubscribe to the notifications associated with VR PM data of VNF instances associated with an NFV network.

In some example embodiments, the processor 810 is able to read instructions from a machine-readable or computer-readable medium (e.g., a machine-readable storage medium) and perform the subscription or the unsubscription discussed herein. In order to **subscribe** to a notification associated with a VR PM data of a VNF instance of an NFV network (e.g., the NFV network 400 in Fig. 4), in some embodiments, the processor 810 is configured to process an element manager (EM) subscription request (e.g., the EM subscription request 412 in Fig. 4), received from an EM (e.g., the EM 404), via the NIC circuitry 820. In some embodiments, the EM subscription request comprises a request to subscribe to a notification associated with VR PM data of a VNF instance. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. In some embodiments, the processor 810 is further configured to generate a VNFM subscription request (e.g., the VNFM subscription request 414 in Fig. 4), and provide/output the generated VNFM subscription request to a virtualized infrastructure manager (VIM), for example, the VIM 408, associated therewith, via the NIC circuitry 820. In some embodiments, the VNFM subscription request comprises a request to subscribe to a notification associated with VR PM data of a VNF instance. In some embodiments, the VNFM subscription request is generated at the processor 810, based on the EM subscription request, in accordance with the instructions stored in the memory 830.

In some embodiments, the processor 810 is further configured to process a VIM subscription response (e.g., the VIM subscription response 416 in Fig. 4) received from the VIM (e.g., the VIM 408 in Fig. 4) via the NIC circuitry 620, in response to the VNFM subscription request. In some embodiments, the VIM subscription response comprises an identifier, for example, subscriptionld that identifies the notification subscription that is successfully subscribed. In some embodiments, the VIM subscription response comprises an identifier for the data availability notification subscription and in other embodiments, the VIM subscription response comprises an identifier for the threshold crossing notification subscription. Upon receiving the VIM subscription response, in some embodiments, the processor 810 is further configured to generate a VNFM subscription response (e.g., the VNFM subscription response 418 in Fig. 4), based on the received VIM subscription response and output/provide the generated VNFM subscription response to the EM (e.g., the EM 404 in Fig. 4). In some embodiments, the VNFM subscription response comprises an identifier, for example, subscriptionld, that identifies the notification subscription that is successfully subscribed. In some embodiments, once the notification is successfully subscribed, the processor 810 is further configured to receive the notification (e.g., the VIM notification 426), from the VIM (e.g., the VIM 408), via the NIC circuitry 820.

Similarly, in some embodiments, in order to **unsubscribe** to a notification subscription associated with the VR PM data that has already been subscribed, the processor 810 is configured to generate a VNFM unsubscribe request (e.g., the VNFM unsubscribe request 514 in Fig. 5), and output or provide the generated VNFM unsubscribe request to a VIM (e.g., the VIM 508 in Fig. 5) associated therewith, via the NIC circuitry 820. In some embodiments, the VNFM unsubscribe request comprises a request comprising an identifier, for example, subscriptionld, that identifies a notification subscription associated with the VR PM data, in order to unsubscribe the notification subscription. In some embodiments, the notification subscription associated with the VR PM data comprises a data availability notification subscription of the VR PM data associated with a PM job. In other embodiments, the notification subscription associated with the VR PM data comprises a threshold crossing notification of one or more thresholds associated with the VR PM data. In some embodiments, the VNFM unsubscribe request is generated at the processor 810, in accordance with the instructions stored in the memory 830.

In some embodiments, the VNFM unsubscribe request is generated at the processor 810, upon receiving an EM unsubscribe request (e.g., the EM unsubscribe request 512 in Fig. 5), from the EM (e.g., the EM 504 in Fig. 5). In such embodiments, prior to generating the VNFM unsubscribe request, the processor 810 is configured to process the EM unsubscribe request (e.g., the EM unsubscribe request 512 in Fig. 5), received from the EM (e.g., the EM 504 in Fig. 5), via the NIC circuitry 820. In some embodiments, the EM unsubscribe request comprises a request comprising an identifier, for example, subscriptionld, that identifies the notification subscription associated with the VR PM data, to unsubscribe the notification subscription. In some embodiments, the notification subscription comprises a data availability notification subscription of the VR PM data associated with a PM job and in other embodiments, the notification subscription comprises a threshold crossing notification of one or more thresholds associated with the VR PM data. In such embodiments, the VNFM unsubscribe request is generated at the processor 810 based on the received EM unsubscribe request.

In some embodiments, the processor 810 is further configured to process a VIM unsubscribe response (e.g., the VIM unsubscribe response 516 in Fig. 5), received from the VIM (e.g., the VIM 508 in Fig. 5), via the NIC circuitry 820, in response to the VNFM unsubscribe request. In some embodiments, the VIM unsubscribe response comprises an identifier that identifies the unsubscription of the notification subscription that is successfully unsubscribed. Upon receiving the VIM unsubscribe response, in some embodiments, the processor 810 is configured to generate a VNFM unsubscribe response (e.g., the VNFM unsubscribe response 518 in Fig. 5) and output the VNFM unsubscribe response to the EM (e.g., the EM 504 in Fig. 5), via the NIC circuitry 820. In some embodiments, the VNFM unsubscribe response is generated based on the received VIM unsubscribe response and the VNFM unsubscribe response comprises an identifier that identifies the unsubscription of the notification subscription (e.g., the data availability notification subscription or the threshold crossing notification subscription) that is successfully unsubscribed. In some embodiments, the VNFM unsubscribe response is generated at the processor 810, in accordance with the instructions stored in the memory 830.

Referring to **FIG. 9****,** illustrated is a block diagram of an apparatus 900 included within an Virtualized infrastructure Manager (VIM) that facilitates to subscribe or unsubscribe to notifications associated with virtualized resources (VR) performance measurement (PM) data of one or more virtual network function (VNF) instances of the NFV network, according to various aspects described herein. The apparatus 900 is explained herein with respect to the VIM 408 of the NFV network 400 in Fig. 4 for subscription and with respect to the VIM 508 of the NFV network 500 in Fig. 5 for unsubscription. The apparatus 900 include a processor 910, optional network interface controller (NIC) circuitry 920 (which can facilitate communication of data via one or more networks in some aspects), and a memory 930 (which can comprise any of a variety of storage mediums and can store instructions and/or data associated with at least one of the processor 910 or NIC circuitry 920).

In some embodiments, the apparatus 900 includes all the features and the functionalities of the components illustrated in Fig. 2. In some aspects, the processor 910, the NIC circuitry 920, and the memory 930 can be included in a single device, while in other aspects, they can be included in different devices, such as part of a distributed network. In some embodiments, the processor 910 can include one or more processors. As described in greater detail below, apparatus 900 can facilitate to subscribe or unsubscribe to the notifications associated with VR PM data of VNF instances associated with an NFV network. In some example embodiments, the processor 910 is able to read instructions from a machine-readable or computer-readable medium (e.g., a machine-readable storage medium) and perform the subscription or the unsubscription discussed herein.

In order to **subscribe** to a notification associated with a VR PM data of a VNF instance of an NFV network (e.g., the NFV network 400 in Fig. 4), in some embodiments, the processor 910 is configured to process a virtualized network function manager (VNFM) subscription request (e.g., the VNFM subscription request 414 in Fig. 4), received from a VNFM (e.g., the VNFM 406 in Fig. 4), via the NIC circuitry 920. In some embodiments, the VNFM subscription request comprises a request to subscribe to a notification associated with VR PM data of a VNF instance. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. Upon processing the VNFM subscription request, the processor 910 is configured to generate a VIM subscription response (e.g., the VIM subscription response 416 in Fig. 4) and provide/output the VIM subscription response to the VNFM (e.g., the VNFM 406 in Fig. 4), via the NIC circuitry 920. In some embodiments, the VIM subscription response comprises an identifier, for example, subscriptionld, that identifies the notification subscription (e.g., the data availability notification subscription or the threshold crossing notification subscription) that is successfully subscribed. In some embodiments, the processor 910 is configured to generate the VIM subscription response based on instructions stored in the memory 930. In some embodiments, once the notification is successfully subscribed, the processor 910 is further configured to provide a notification (e.g., the VIM notification 426), to the VNFM (e.g., the VNFM 406), via the NIC circuitry 920.

Similarly, in some embodiments, in order to **unsubscribe** to a notification subscription associated with the VR PM data that has already been subscribed, the processor 910 is configured to process a VNFM unsubscribe request (e.g., the VNFM unsubscribe request 514 in Fig. 5), received from a VNFM (e.g., the VNFM 506 in Fig. 5), via the NIC circuitry 920. In some embodiments, the VNFM unsubscribe request comprises a request to unsubscribe to a notification subscription associated with the VR PM data of a VNF instance. In some embodiments, the notification subscription associated with the VR PM data comprises a data availability notification subscription of the VR PM data associated with a PM job. In other embodiments, the notification subscription associated with the VR PM data comprises a threshold crossing notification subscription of one or more thresholds associated with the VR PM data. Upon processing the VNFM unsubscribe request, the processor 910 is configured to generate a VIM unsubscribe response (e.g., the VIM unsubscribe response 516 in Fig. 5) and provide/output the VIM unsubscribe response to the VNFM (e.g., the VNFM 506 in Fig. 5), via the NIC circuitry 920. In some embodiments, the VIM unsubscribe response comprises an identifier, for example, subscriptionld, that identifies the notification unsubscription (e.g., the data availability notification unsubscription or the threshold crossing notification unsubscription), when the notification subscription is successfully unsubscribed. In some embodiments, the processor 910 is configured to generate the VIM unsubscribe response based on instructions stored in the memory 930.

**Fig. 10** illustrates a flowchart of a method 1000 for a network manager (NM) of a network function virtualization network, that facilitates to subscribe to notifications associated with virtualized resources (VR) performance measurement (PM) data of one or more virtual network function (VNF) instances of the NFV network, according to various embodiments of the disclosure. The method 1000 is described herein with reference to the apparatus 600 in Fig. 6 and the NFV network 400 in Fig. 4. In some embodiments, the apparatus 1000 is included within the NM 402 in Fig. 4. At 1010, an NM subscription request comprising a request to subscribe to a notification associated with a virtualization resources (VR) performance measurement (PM) data of a VNF instance, is generated at the processor 610 and provided to an element manager (EM) in a network function virtualization (NFV) network having one or more VNF instances associated therewith, via the NIC circuitry 620. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. At 1020, an EM subscription response received from the EM, in response to the NM subscription request, is processed at the processor 610. In some embodiments, the EM subscription response comprises a parameter, status, indicating a result of the notification subscription and an identifier, for example, subscription Id, that identifies the notification subscription, when the notification is successfully subscribed.

**Fig. 11** illustrates a flowchart of a method 1100 for a network manager (NM) of a network function virtualization network, that facilitates to unsubscribe to notifications associated with virtualized resources (VR) performance measurement (PM) data of one or more virtual network function (VNF) instances of the NFV network, according to various embodiments of the disclosure. The method 1200 is described herein with reference to the apparatus 600 in Fig. 6 and the NFV network 500 in Fig. 5. In some embodiments, the apparatus 1200 is included within the NM 502 in Fig. 5. At 1110, an NM unsubscribe request comprising a request to unsubscribe to a notification subscription associated with a virtualization resources (VR) performance measurement (PM) data of a VNF instance, is generated at the processor 610 and provided to an element manager (EM) in a network function virtualization (NFV) network having one or more VNF instances associated therewith, via the NIC circuitry 620. In some embodiments, the notification subscription associated with the VR PM data comprises a data availability notification subscription of the VR PM data associated with a PM job. In other embodiments, the notification subscription associated with the VR PM data comprises a threshold crossing notification subscription of one or more thresholds associated with the VR PM data. In some embodiments, the NM unsubscribe request comprises an identifier that identifies the notification subscription of the VR PM data, in order to unsubscribe the notification subscription of the VR PM data. At 1120, an EM unsubscribe response received from the EM, in response to the NM unsubscribe request, is processed at the processor 610, wherein the EM unsubscribe response comprises a parameter, status, indicating a result of the unsubscription.

**Fig. 12** illustrates a flowchart of a method 1200 for an element manager (EM) of a network function virtualization network, that facilitates to subscribe to notifications associated with virtualized resources (VR) performance measurement (PM) data of one or more virtual network function (VNF) instances of the NFV network, according to various embodiments of the disclosure. The method 1200 is described herein with reference to the apparatus 700 in Fig. 7 and the NFV network 400 in Fig. 4. In some embodiments, the apparatus 700 is included within the EM 404 in Fig. 4. At 1210, a network manager (NM) subscription request comprising a request to subscribe to a notification associated with VR PM data of a VNF instance, received from an NM, via the NIC circuitry 720 is processed at the processor 710. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. In some embodiments, the NM subscription request comprises a parameter, filter that identifies information associated with the subscription.

At 1220, an EM subscription request comprising a request to subscribe to a notification associated with the VR PM data of the VNF instance is generated at the processor 710 and provided to a virtualized network function manager (VNFM) associated therewith, via the NIC circuitry 720. In some embodiments, the EM subscription request is generated based on the received NM subscription request. At 1230, a VNFM subscription response received from the VNFM, via the NIC circuitry 720, in response to the EM subscription request is processed at the processor 710. In some embodiments, the VNFM subscription response comprises an identifier that identifies a notification subscription, when the notification is successfully subscribed. At 1240, an EM subscription response is generated at the processor 710 based on the received VNFM subscription response and provided to the NM, via the NIC circuitry 720. In some embodiments, the EM subscription response comprises a parameter, status, indicating a result of the notification subscription and an identifier that identifies the notification subscription, when the notification is successfully subscribed.

**Fig. 13** illustrates a flowchart of a method 1300 for an element manager (EM) of a network function virtualization network, that facilitates to unsubscribe to notifications associated with virtualized resources (VR) performance measurement (PM) data of one or more virtual network function (VNF) instances of the NFV network, according to various embodiments of the disclosure. The method 1300 is described herein with reference to the apparatus 700 in Fig. 7 and the NFV network 500 in Fig. 5. In some embodiments, the apparatus 700 is included within the EM 504 in Fig. 5. At 1310, a network manager (NM) unsubscribe request comprising a request to unsubscribe to a notification subscription associated with VR PM data of a VNF instance, received from an NM, via the NIC circuitry 720 is processed at the processor 710. In some embodiments, the NM unsubscribe request further comprises an identifier that identifies the notification subscription to be unsubscribed. In some embodiments, the notification subscription associated with the VR PM data comprises a data availability notification subscription of the VR PM data associated with a PM job. In other embodiments, the notification subscription associated with the VR PM data comprises a threshold crossing notification subscription of one or more thresholds associated with the VR PM data.

At 1320, an EM unsubscribe request comprising a request to unsubscribe to the notification subscription associated with the VR PM data of the VNF instance is generated at the processor 710 and provided to a virtualized network function manager (VNFM) associated therewith, via the NIC circuitry 720. In some embodiments, the EM unsubscribe request is generated based on the received NM unsubscribe request and an identifier that identifies the notification subscription to be unsubscribed. At 1330, a VNFM unsubscribe response received from the VNFM, via the NIC circuitry 720, in response to the EM unsubscribe request is processed at the processor 710. In some embodiments, the VNFM unsubscribe response comprises an identifier that identifies a notification unsubscription, when the notification subscription is successfully unsubscribed. At 1340, an EM unsubscribe response is generated at the processor 710 based on the received VNFM unsubscribe response and provided to the NM, via the NIC circuitry 720. In some embodiments, the EM unsubscribe response comprises a parameter, status, indicating a result of the notification unsubscription.

**Fig. 14** illustrates a flowchart of a method 1400 for a Virtualized Network Function Manager (VNFM) of a network function virtualization network, that facilitates to subscribe to notifications associated with virtualized resources (VR) performance measurement (PM) data of one or more virtual network function (VNF) instances of the NFV network, according to various embodiments of the disclosure. The method 1400 is described herein with reference to the apparatus 800 in Fig. 8 and the NFV network 400 in Fig. 4. In some embodiments, the apparatus 800 is included within the VNFM 406 in Fig. 4. At 1410, an element manager (EM) subscription request comprising a request to subscribe to a notification associated with a VR PM data of a VNF instance, received from an EM, via the NIC circuitry 820 is processed at the processor 810. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data.

At 1420, a VNFM subscription request comprising a request to subscribe to the notification associated with the VR PM data of the VNF instance is generated at the processor 810 and provided to a virtualized infrastructure manager (VIM), via the NIC circuitry 820. In some embodiments, the VNFM subscription request is generated at the processor 810 based on the received EM subscription request. At 1430, a VIM subscription response received from the VIM via the NIC circuitry 820, in response to the VNFM subscription request, is processed at the processor 810. In some embodiments, the VIM subscription response comprises an identifier that identifies a notification subscription, when the notification is successfully subscribed. At 1440, a VNFM subscription response is generated at the processor 810 based on the received VIM subscription response and provided to the EM, via the NIC circuitry 820. In some embodiments, the VNFM subscription response comprises an identifier that identifies the notification subscription, when the notification is successfully subscribed. In some embodiments, the identifiers that identify the notification subscription in the VIM subscription response and in the VNFM subscription response are the same.

**Fig. 15** illustrates a flowchart of a method 1500 for a Virtualized Network Function Manager (VNFM) of a network function virtualization network, that facilitates to unsubscribe to notifications associated with virtualized resources (VR) performance measurement (PM) data of one or more virtual network function (VNF) instances of the NFV network, according to various embodiments of the disclosure. The method 1500 is described herein with reference to the apparatus 800 in Fig. 8 and the NFV network 500 in Fig. 5. In some embodiments, the apparatus 800 is included within the VNFM 506 in Fig. 5. At 1510, an element manager (EM) unsubscribe request comprising a request to unsubscribe to a notification subscription associated with VR PM data of a VNF instance, received from an EM, via the NIC circuitry 820 is processed at the processor 810. In some embodiments, the EM unsubscribe request further comprises an identifier that identifies the notification subscription to be unsubscribed. In some embodiments, the notification subscription associated with the VR PM data comprises a data availability notification subscription of the VR PM data associated with a PM job. In other embodiments, the notification subscription associated with the VR PM data comprises a threshold crossing notification subscription of one or more thresholds associated with the VR PM data.

At 1520, a VNFM unsubscribe request comprising a request to unsubscribe to the notification subscription associated with the VR PM data of the VNF instance is generated at the processor 810 and provided to a virtualized infrastructure manager (VIM), via the NIC circuitry 820. In some embodiments, the VNFM unsubscribe request is generated at the processor 810 based on the received EM unsubscribe request and comprises the identifier that identifies the notification subscription to be unsubscribed. At 1530, a VIM unsubscribe response received from the VIM via the NIC circuitry 820, in response to the VNFM unsubscribe request, is processed at the processor 810. In some embodiments, the VIM unsubscribe response comprises an identifier that identifies a notification unsubscription, when the notification subscription is successfully unsubscribed. At 1540, a VNFM unsubscribe response is generated at the processor 810 based on the received VIM unsubscribe response and provided to the EM, via the NIC circuitry 820. In some embodiments, the VNFM subscription response comprises the identifier that identifies a notification unsubscription, when the notification subscription is successfully unsubscribed.

**Fig. 16** illustrates a flowchart of a method 1600 for a Virtualized Infrastructure Manager (VIM) of a network function virtualization network, that facilitates to subscribe to notifications associated with virtualized resources (VR) performance measurement (PM) data of one or more virtual network function (VNF) instances of the NFV network, according to various embodiments of the disclosure. The method 1600 is described herein with reference to the apparatus 900 in Fig. 9 and the NFV network 400 in Fig. 4. In some embodiments, the apparatus 900 is included within the VIM 408 in Fig. 4. At 1610, a virtualized network function manager (VNFM) subscription request comprising a request to subscribe to a notification associated with a VR PM data of a VNF instance, received from a VNFM, via the NIC circuitry 920, is processed at the processor 910. In some embodiments, the notification associated with the VR PM data comprises a data availability notification of the VR PM data associated with a PM job. In other embodiments, the notification associated with the VR PM data comprises a threshold crossing notification of one or more thresholds associated with the VR PM data. At 1620, a VIM subscription response is generated at the processor 910, in response to the received VNFM subscription request and provided to the VNFM, via the NIC circuitry 920. In some embodiments, the VIM subscription response comprises an identifier that identifies the notification subscription, when the notification is successfully subscribed.

**Fig. 17** illustrates a flowchart of a method 1700 for a Virtualized Infrastructure Manager (VIM) of a network function virtualization network, that facilitates to unsubscribe to notifications associated with virtualized resources (VR) performance measurement (PM) data of one or more virtual network function (VNF) instances of the NFV network, according to various embodiments of the disclosure. The method 1700 is described herein with reference to the apparatus 900 in Fig. 9 and the NFV network 500 in Fig. 5. In some embodiments, the apparatus 900 is included within the VIM 508 in Fig. 5. At 1710, a virtualized network function manager (VNFM) unsubscribe request comprising a request to unsubscribe to a notification subscription associated with a VR PM data of a VNF instance, received from a VNFM, via the NIC circuitry 920 is processed at the processor 910. In some embodiments, the VNFM unsubscribe request further comprises an identifier that identifies the notification subscription to be unsubscribed. In some embodiments, the notification subscription associated with the VR PM data comprises a data availability notification subscription of the VR PM data associated with a PM job. In other embodiments, the notification subscription associated with the VR PM data comprises a threshold crossing notification subscription of one or more thresholds associated with the VR PM data. At 1720, a VIM unsubscribe response is generated at the processor 910, in response to the received VNFM unsubscribe request and provided to the VNFM, via the NIC circuitry 920. In some embodiments, the VIM unsubscribe response comprises an identifier that identifies the notification unsubscription, when the notification subscription is successfully unsubscribed.

While the apparatus has been illustrated and described with respect to one or more implementations, alterations and/or modifications may be made to the illustrated examples without departing from the scope of the appended claims.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of the claims as those skilled in the relevant art can recognize.

## Claims

1. An apparatus configured to be employed within a Network Manager, NM, (302;402;502) **characterised by** comprising:
means for outputting a network manager, NM, subscription request (410) generated at the NM (302;402;502), to an element manager, EM, (306;404;504) in a network function virtualization, NFV, network (300;400;500) having one or more virtual network function, VNF, instances associated therewith, wherein the NM subscription request (410) comprises a request to subscribe to a notification associated with a virtualization resources, VR, performance measurement, PM, data of a VNF instance of the one or more VNF instances, wherein the VNF instance implements a network function associated with an evolved packet core, EPC, network; and
means for processing an EM subscription response (420) received from the EM (306;404;504), in response to the NM subscription request (410), wherein the EM subscription response (420) comprises information on a result of the subscription.

2. The apparatus of claim 1, wherein NM subscription request (410) comprises a request to subscribe to a data availability notification of the VR PM data associated with a performance measurement, PM, job configured to collect the VR PM data of the VNF instance, and wherein the request to subscribe to the data availability notification comprises a parameter, filter, that identifies information associated with the subscription, and the EM subscription response (420) comprises a parameter, status, indicating a result of the data availability notification subscription and an identifier, subscription Id, that identifies the data availability notification subscription that is successfully subscribed.

3. The apparatus of claim 2, further comprising:
means for outputting a network manager, NM, unsubscribe request (510) generated at the NM (302;402;502), to the EM (306;404;504), wherein the NM unsubscribe request (510) comprises a request, comprising the subscription Id, to unsubscribe the data availability notification subscription of the VR PM data; and
means for processing an EM unsubscribe response (520) received from the EM (306;404;504), in response to the NM unsubscribe request (510), wherein the EM unsubscribe response (520) comprises a parameter, status, indicating a result of the unsubscription.

4. The apparatus of claim 1, wherein the NM subscription request (410) comprises a request, comprising a parameter, filter, that identifies information associated with the subscription, to subscribe to a threshold crossing notification of one or more thresholds associated the VR PM data, in order to receive the threshold crossing notification when the VR PM data crosses or reaches a threshold, and the EM subscription response (420) comprises a parameter, status, indicating a result of the threshold crossing notification subscription and an identifier, subscription Id, that identifies the threshold crossing notification subscription that is successfully subscribed.

5. The apparatus of claim 4, further comprising:
means for outputting a network manager, NM, unsubscribe request (510) generated at the NM, (302;402;502) to the EM (306;404;504), wherein the NM unsubscribe request (510) comprises a request, comprising the subscription Id, to unsubscribe the threshold crossing notification subscription of the VR PM data; and
means for processing an EM unsubscribe response (520) received from the EM (306;404;504), in response to the NM unsubscribe request (510), wherein the EM unsubscribe response (520) comprises a parameter, status, indicating a result of the unsubscription.

6. An apparatus configured to be employed within an Element Manager, EM (306;404;504), in a network function virtualization, NFV, network (300;400;500) **characterised by** comprising:
means for processing a network manager, NM, subscription request (410) received from an NM (302;402;502), wherein the NM subscription request (410) comprises a request to subscribe to a notification associated with a virtualization resources, VR, performance measurement, PM, data of a VNF instance of one or more VNF instances associated with the NFV network (300;400;500), wherein the VNF instance implements a network function associated with an evolved packet core, EPC, network;
means for outputting an EM subscription request (412) generated based on the NM subscription request (410), to a virtualized network function manager, VNFM, wherein the EM subscription request comprises a request to subscribe to the data availability notification of the VNF related VR PM data;
means for processing a VNFM subscription response (418) received from the VNFM (310;406;506), in response to the EM subscription request (412), wherein the VNFM subscription response (418) comprises information on the subscription; and
means for outputting an EM subscription response (420) to the NM (302;402;502), in response to the NM subscription request (410), wherein the EM subscription response (420) comprises information on a result of the subscription.

7. The apparatus of claim 6, wherein NM subscription request (410) comprises a request to subscribe to a data availability notification of the VR PM data associated with a performance measurement, PM, job configured to collect the VR PM data of the VNF instance, and wherein the request to subscribe to the data availability notification comprises a parameter, filter, that identifies information associated with the subscription, and
the EM subscription response (420) comprises a parameter, status, indicating a result of the data availability notification subscription and an identifier, subscription Id, that identifies the data availability notification subscription that is successfully subscribed.

8. The apparatus of claim 7, wherein:
the EM subscription request (412) comprises a request to subscribe to the data availability notification associated with VR PM data and wherein the request to subscribe to the data availability notification comprises the parameter, filter, that identifies information associated with the subscription.

9. The apparatus of any of the claims 7-8, further comprising:
means for outputting an EM unsubscribe request (512) to a virtualized network function manager, VNFM (310;406;506), wherein the EM unsubscribe request (512) comprises a request comprising the identifier, subscription Id, that identifies the data availability notification subscription, to unsubscribe the data availability notification subscription of the VR PM data; and
means for processing a VNFM unsubscribe response (518) received from the VNFM (310;406;506), in response to the EM unsubscribe request (512), wherein the VNFM unsubscribe response (518) comprises an identifier that identifies the unsubscription of the data availability notification subscription that is successfully unsubscribed.

10. The apparatus of claim 7, further comprising:
means for processing a network manager, NM, unsubscribe request (510) received from the NM (302;402;502), wherein the NM unsubscribe request (510) comprises a request, comprising the subscription Id, to unsubscribe the data availability notification subscription of the VR PM data; and
means for outputting an EM unsubscribe response (520) to the NM (302;402;502) in response to NM unsubscribe request (510), wherein the EM unsubscribe response (520) comprises a parameter, status, indicating a result of the unsubscription.

## Patentansprüche

1. Einrichtung, die dazu ausgelegt ist, in einem Netzwerkmanager, NM, (302; 402; 502) eingesetzt zu werden, **dadurch gekennzeichnet, dass** sie Folgendes umfasst:
ein Mittel zum Ausgeben einer an dem NM (302; 402; 502) erzeugten Netzwerkmanager- bzw. NM-Subskriptionsanforderung (410) an einen Elementmanager, EM, (306; 404; 504) in einem Netzwerkfunktionsvirtualisierungs- bzw. NFV-Netzwerk (300; 400; 500) mit einer oder mehreren damit assoziierten Virtuellnetzwerkfunktions- bzw. VNF-Instanzen, wobei die NM-Subskriptionsanforderung (410) eine Anforderung zum Subskribieren bei einer Benachrichtigung, die mit Virtualisierungsressourcen-Leistungsmessdaten bzw. VR-PM-Daten einer VNF-Instanz der einen oder der mehreren VNF-Instanzen assoziiert ist, wobei die VNF-Instanz eine mit einem Evolved-Packet-Core- bzw. EPC-Netzwerk assoziierte Netzwerkfunktion implementiert; und
ein Mittel zum Verarbeiten einer von dem EM (306; 404; 504) empfangenen EM-Subskriptionsantwort (420) als Reaktion auf die NM-Subskriptionsanforderung (410), wobei die EM-Subskriptionsantwort (420) Informationen über ein Ergebnis der Subskription umfasst.

2. Einrichtung nach Anspruch 1, wobei die NM-Subskriptionsanforderung (410) eine Anforderung zum Subskribieren bei einer Datenverfügbarkeitsbenachrichtigung der VR-PM-Daten, assoziiert mit einer Leistungsmess- bzw. PM-Aufgabe, ausgelegt zum Erfassen der VR-PM-Daten der VNF-Instanz, umfasst und wobei die Anforderung zum Subskribieren bei der Datenverfügbarkeitsbenachrichtigung einen Parameter, Filter, umfasst, der mit der Subskription assoziierte Informationen identifiziert, und
die EM-Subskriptionsantwort (420) einen Parameter, Status, der ein Ergebnis der Datenverfügbarkeitsbenachrichtigungssubskription angibt, und eine Kennung, Subskriptions-ID, die die erfolgreich subskribierte Datenverfügbarkeitsbenachrichtigungssubskription identifiziert, umfasst.

3. Einrichtung nach Anspruch 2, die ferner Folgendes umfasst:
ein Mittel zum Ausgeben einer an dem NM (302; 402; 502) erzeugten Netzwerkmanager- bzw. NM-Entsubskriptionsanforderung (510) an den EM (306; 404; 504), wobei die NM-Entsubskriptionsanforderung (510) eine Anforderung umfasst, umfassend die Subskriptions-ID, zum Entsubskribieren der Datenverfügbarkeitsbenachrichtigungssubskription der VR-PM-Daten; und
ein Mittel zum Verarbeiten einer von dem EM (306; 404; 504) empfangenen EM-Entsubskriptionsantwort (520) als Reaktion auf die NM-Entsubskriptionsanforderung (510), wobei die EM-Entsubskriptionsantwort (520) einen Parameter, Status, umfasst, der ein Ergebnis der Entsubskription angibt.

4. Einrichtung nach Anspruch 1, wobei die NM-Subskriptionsanforderung (410) eine Anforderung umfasst, umfassend einen Parameter, Filter, der mit der Subskription assoziierte Informationen identifiziert, zum Subskribieren bei einer Schwellendurchquerungsbenachrichtigung einer oder mehrerer mit den VR-PM-Daten assoziierter Schwellen, um die Schwellendurchquerungsbenachrichtigung zu empfangen, wenn die VR-PM-Daten eine Schwelle durchqueren oder erreichen, und die EM-Subskriptionsantwort (420) einen Parameter, Status, der ein Ergebnis der Schwellendurchquerungsbenachrichtigungssubskription angibt, und eine Kennung, Subskriptions-ID, die die erfolgreich subskribierte Schwellendurchquerungsbenachrichtigungssubskription identifiziert, umfasst.

5. Einrichtung nach Anspruch 4, die ferner Folgendes umfasst:
ein Mittel zum Ausgeben einer an dem NM (302; 402; 502) erzeugten Netzwerkmanager- bzw. NM-Entsubskriptionsanforderung (510) an den EM (306; 404; 504), wobei die NM-Entsubskriptionsanforderung (510) eine Anforderung umfasst, umfassend die Subskriptions-ID, zum Entsubskribieren der Schwellendurchquerungsbenachrichtigungssubskription der VR-PM-Daten; und
ein Mittel zum Verarbeiten einer von dem EM (306; 404; 504) empfangenen EM-Entsubskriptionsantwort (520) als Reaktion auf die NM-Entsubskriptionsanforderung (510), wobei die EM-Entsubskriptionsantwort (520) einen Parameter, Status, umfasst, der ein Ergebnis der Entsubskription angibt.

6. Einrichtung, die dazu ausgelegt ist, in einem Elementmanager, EM, (306; 404; 504) in einem Netzwerkfunktionsvirtualisierungs- bzw. NFV-Netzwerk (300; 400; 500) eingesetzt zu werden, **dadurch gekennzeichnet, dass** sie Folgendes umfasst:
ein Mittel zum Verarbeiten einer von einem NM (302; 402; 502) empfangenen Netzwerkmanager- bzw. NM-Subskriptionsanforderung (410), wobei die NM-Subskriptionsanforderung (410) eine Anforderung zum Subskribieren bei einer Benachrichtigung, die mit Virtualisierungsressourcen-Leistungsmessdaten bzw. VR-PM-Daten einer VNF-Instanz von einer oder mehreren mit dem NFV-Netzwerk (300; 400; 500) assoziierten VNF-Instanzen assoziiert ist, wobei die VNF-Instanz eine mit einem Evolved-Packet-Core- bzw. EPC-Netzwerk assoziierte Netzwerkfunktion implementiert; und
ein Mittel zum Ausgeben einer basierend auf der NM-Subskriptionsanforderung (410) erzeugten EM-Subskriptionsanforderung (412) an einen virtualisierten Netzwerkfunktionsmanager, VNFM, wobei die EM-Subskriptionsanforderung eine Anforderung zum Subskribieren bei der Datenverfügbarkeitsbenachrichtigung der VNF-bezogenen VR-PM-Daten umfasst;
ein Mittel zum Verarbeiten einer von dem VNFM (310; 406; 506) empfangenen VNFM-Subskriptionsantwort (418) als Reaktion auf die EM-Subskriptionsanforderung (412), wobei die VNFM-Subskriptionsantwort (418) Informationen über die Subskription umfasst; und
ein Mittel zum Ausgeben einer EM-Subskriptionsantwort (420) an den NM (302; 402; 502) als Reaktion auf die NM-Subskriptionsanforderung (410), wobei die EM-Subskriptionsantwort (420) Informationen über ein Ergebnis der Subskription umfasst.

7. Einrichtung nach Anspruch 6, wobei die NM-Subskriptionsanforderung (410) eine Anforderung zum Subskribieren bei einer Datenverfügbarkeitsbenachrichtigung der VR-PM-Daten, assoziiert mit einer Leistungsmess- bzw. PM-Aufgabe, ausgelegt zum Erfassen der VR-PM-Daten der VNF-Instanz, umfasst und wobei die Anforderung zum Subskribieren bei der Datenverfügbarkeitsbenachrichtigung einen Parameter, Filter, umfasst, der mit der Subskription assoziierte Informationen identifiziert, und
die EM-Subskriptionsantwort (420) einen Parameter, Status, der ein Ergebnis der Datenverfügbarkeitsbenachrichtigungssubskription angibt, und eine Kennung, Subskriptions-ID, die die erfolgreich subskribierte Datenverfügbarkeitsbenachrichtigungssubskription identifiziert, umfasst.

8. Einrichtung nach Anspruch 7, wobei:
die EM-Subskriptionsanforderung (412) eine Anforderung zum Subskribieren bei der mit den VR-PM-Daten assoziierten Datenverfügbarkeitsbenachrichtigung umfasst und wobei die Anforderung zum Subskribieren bei der Datenverfügbarkeitsbenachrichtigung den Parameter, Filter, umfasst, der mit der Subskription assoziierte Informationen identifiziert.

9. Einrichtung nach einem der Ansprüche 7-8, die ferner Folgendes umfasst:
ein Mittel zum Ausgeben einer EM-Entsubskriptionsanforderung (512) an einen virtualisierten Netzwerkfunktionsmanager, VNFM (310; 406; 506), wobei die EM-Entsubskriptionsanforderung (512) eine Anforderung umfasst, umfassend die Kennung, Subskriptions-ID, die die Datenverfügbarkeitsbenachrichtigungssubskription identifiziert, zum Entsubskribieren der Datenverfügbarkeitsbenachrichtigungssubskription der VR-PM-Daten; und
ein Mittel zum Verarbeiten einer von dem VNFM (310; 406; 506) empfangenen VNFM-Entsubskriptionsantwort (518) als Reaktion auf die EM-Entsubskriptionsanforderung (512), wobei die VNFM-Entsubskriptionsantwort (518) eine Kennung umfasst, die die Entsubskription der erfolgreich entsubskribierten Datenverfügbarkeitsbenachrichtigungssubskription identifiziert.

10. Einrichtung nach Anspruch 7, die ferner Folgendes umfasst:
ein Mittel zum Verarbeiten einer von dem NM (302; 402; 502) empfangenen Netzwerkmanager- bzw. NM-Entsubskriptionsanforderung (510), wobei die NM-Entsubskriptionsanforderung (510) eine Anforderung umfasst, umfassend die Subskriptions-ID, zum Entsubskribieren der Datenverfügbarkeitsbenachrichtigungssubskription der VR-PM-Daten; und
ein Mittel zum Ausgeben einer EM-Entsubskriptionsantwort (520) an den NM (302; 402; 502) als Reaktion auf die NM-Entsubskriptionsanforderung (510), wobei die EM-Entsubskriptionsantwort (520) einen Parameter, Status, umfasst, der ein Ergebnis der Entsubskription angibt.

## Revendications

1. Appareil configuré pour être utilisé dans un gestionnaire de réseau, NM, (302 ; 402 ; 502), **caractérisé en ce qu'**il comprend :
des moyens pour envoyer une demande (410) d'abonnement de gestionnaire de réseau, NM, générée au niveau du NM (302 ; 402 ; 502), à un gestionnaire d'élément, EM, (306 ; 404 ; 504) sur un réseau de virtualisation de fonction réseau, NFV, (300 ; 400 ; 500) auquel sont associées une ou plusieurs instances de fonction réseau virtuelle, VNF, la demande d'abonnement de NM (410) comprenant une demande d'abonnement à une notification associée à des données de mesure de performance, PM, de ressources de virtualisation, VR, d'une instance VNF parmi les une ou plusieurs instances VNF, l'instance VNF mettant en oeuvre une fonction réseau associée à un réseau central par paquets évolué, EPC ; et
des moyens pour traiter une réponse d'abonnement d'EM (420) reçue en provenance de l'EM (306 ; 404 ; 504), en réponse à la demande d'abonnement de NM (410), la réponse d'abonnement d'EM (420) comprenant des informations sur un résultat de l'abonnement.

2. Appareil selon la revendication 1, dans lequel la demande d'abonnement de NM (410) comprend une demande d'abonnement à une notification de disponibilité de données des données PM VR associées à un travail de mesure de performance, PM, configuré pour collecter les données PM VR de l'instance VNF, et dans lequel la demande d'abonnement à la notification de disponibilité de données comprend un paramètre, filtre, qui identifie des informations associées à l'abonnement, et la réponse d'abonnement d'EM (420) comprend un paramètre, état, indiquant un résultat d'abonnement à la notification de disponibilité de données et un identifiant, Id d'abonnement, qui identifie l'abonnement à la notification de disponibilité de données qui est souscris avec succès.

3. Appareil selon la revendication 2, comprenant en outre :
des moyens pour envoyer une demande (510) de désabonnement de gestionnaire de réseau, NM, générée au niveau du NM (302 ; 402 ; 502), à l'EM, (306 ; 404 ; 504), la demande de désabonnement de NM (510) comprenant une demande, qui comprend l'Id d'abonnement, de désabonnement de l'abonnement à la notification de disponibilité de données des données PM VR ; et
des moyens pour traiter une réponse de désabonnement d'EM (520) reçue en provenance de l'EM (306 ; 404 ; 504), en réponse à la demande de désabonnement NM (510), la réponse de désabonnement d'EM (520) comprenant un paramètre, état, indiquant un résultat du désabonnement.

4. Appareil selon la revendication 1, dans lequel la demande d'abonnement de NM (410) comprend une demande, qui comprend un paramètre, filtre, qui identifie des informations associées à l'abonnement, d'abonnement à une notification de passage de seuil d'un ou plusieurs seuils associés aux données PM VR, afin de recevoir la notification de passage de seuil lorsque les données PM VR passent ou atteignent un seuil, et la réponse d'abonnement d'EM (420) comprend un paramètre, état, indiquant un résultat de l'abonnement à la notification de passage de seuil, et un identifiant, Id d'abonnement, qui identifie l'abonnement à la notification de passage de seuil qui est souscrit avec succès.

5. Appareil selon la revendication 4, comprenant en outre :
des moyens pour envoyer une demande (510) de désabonnement de gestionnaire de réseau, NM, générée au niveau du NM (302 ; 402 ; 502), à l'EM, (306 ; 404 ; 504), la demande de désabonnement de NM (510) comprenant une demande, qui comprend l'Id d'abonnement, de désabonnement de l'abonnement à la notification de passage de seuil des données PM VR ; et
des moyens pour traiter une réponse de désabonnement d'EM (520) reçue en provenance de l'EM (306 ; 404 ; 504), en réponse à la demande de désabonnement de NM (510), la réponse de désabonnement d'EM (520) comprenant un paramètre, état, indiquant un résultat du désabonnement.

6. Appareil configuré pour être utilisé dans un gestionnaire d'élément, EM, (306 ; 404 ; 504), sur un réseau de virtualisation de fonction réseau, NFV, (300 ; 400 ; 500), **caractérisé en ce qu'**il comprend :
des moyens pour traiter une demande (410) d'abonnement de gestionnaire de réseau, NM, reçue en provenance d'un NM (302 ; 402 ; 502), la demande d'abonnement de NM (410) comprenant une demande d'abonnement à une notification associée à des données de mesure de performance, PM, de ressources de virtualisation, VR, d'une instance VNF parmi les une ou plusieurs instances VNF associées au réseau NFV (300 ; 400 ; 500), l'instance VNF mettant en oeuvre une fonction réseau associée à un réseau central par paquets évolué, EPC ;
des moyens pour envoyer une demande d'abonnement d'EM (412) générée en fonction de la demande d'abonnement de NM (410), à un gestionnaire de fonction réseau virtualisée, VNFM, la demande d'abonnement d'EM comprenant une demande d'abonnement à la notification de disponibilité de données des données PM VR relatives à la VNF ;
des moyens pour traiter une réponse d'abonnement de VNFM (418) reçue en provenance du VNFM (310 ; 406 ; 506), en réponse la demande d'abonnement d'EM (412), la réponse d'abonnement de VNFM (418) comprenant des informations sur l'abonnement ; et
des moyens pour envoyer une réponse d'abonnement d'EM (420) au NM (302 ; 402 ; 502), en réponse à la demande d'abonnement de NM (410), la réponse d'abonnement d'EM (420) comprenant des informations sur un résultat de l'abonnement.

7. Appareil selon la revendication 6, dans lequel la demande d'abonnement de NM (410) comprend une demande d'abonnement à une notification de disponibilité de données des données PM VR associées à un travail de mesure de performance, PM, configuré pour collecter les données PM VR de l'instance VNF, et dans lequel la demande d'abonnement à la notification de disponibilité de données comprend un paramètre, filtre, qui identifie des informations associées à l'abonnement, et
la réponse d'abonnement d'EM (420) comprenant un paramètre, état, indiquant un résultat de l'abonnement à la notification de disponibilité de données et un identifiant, Id d'abonnement, qui identifie l'abonnement à la notification de disponibilité de données qui est souscrit avec succès.

8. Appareil selon la revendication 7, dans lequel :
la demande d'abonnement d'EM (412) comprend une demande d'abonnement à la notification de disponibilité de données associée à des données PM VR et dans lequel la demande d'abonnement à la notification de disponibilité de données comprend un paramètre, filtre, qui identifie des informations associées à l'abonnement.

9. Appareil selon l'une quelconque des revendications 7 à 8, comprenant en outre :
des moyens pour envoyer une demande de désabonnement d'EM (512) à un gestionnaire de fonction réseau virtualisée, VNFM, (310 ; 406 ; 506), la demande de désabonnement d'EM (512) comprenant une demande, qui comprend l'identifiant, Id d'abonnement, qui identifie l'abonnement à la notification de disponibilité de données, de désabonnement de l'abonnement à la notification de disponibilité de données des données PM VR ; et
des moyens pour traiter une réponse de désabonnement de VNFM (518) reçue en provenance du VNFM (310 ; 406 ; 506), en réponse à la demande de désabonnement d'EM (512), la réponse de désabonnement VNFM (518) comprenant identifiant qui identifie le désabonnement de l'abonnement à la notification de disponibilité de données qui est annulé avec succès.

10. Appareil selon la revendication 7, comprenant en outre :
des moyens pour traiter une demande (510) de désabonnement de gestionnaire de réseau, NM, reçue en provenance du NM (302 ; 402 ; 502), la demande de désabonnement NM (510) comprenant une demande, qui comprend l'Id d'abonnement, de désabonnement de l'abonnement à la notification de disponibilité de données des données PM VR ; et
des moyens pour envoyer une réponse de désabonnement d'EM (520) au NM (302 ; 402 ; 502), en réponse à la demande de désabonnement de NM (510), la réponse de désabonnement d'EM (520) comprenant un paramètre, état, indiquant un résultat du désabonnement.
